(19) Europäisches Patentamt
European Patent Office
Office européen des brevets

(11) EP 4 567 056 A1

# (12) EUROPEAN PATENT APPLICATION

published in accordance with Art. 153(4) EPC

(43) Date of publication:
**11.06.2025 Bulletin 2025/24**

(21) Application number: **23850046.6**

(22) Date of filing: **31.07.2023**

(51) International Patent Classification (IPC):
***C08G 63/60*** (2006.01) ***C08G 63/78*** (2006.01)
***C08L 101/16*** (2006.01)

(52) Cooperative Patent Classification (CPC):
**C08G 63/60; C08G 63/78; C08L 101/16**

(86) International application number:
**PCT/JP2023/027959**

(87) International publication number:
**WO 2024/029492 (08.02.2024 Gazette 2024/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **01.08.2022 JP 2022122988**

(71) Applicants:
- **DIC Corporation**
  **Tokyo 174-8520 (JP)**
- **National Institute of Advanced Industrial Science and Technology**
  **Chiyoda-ku**
  **Tokyo 100-8921 (JP)**

(72) Inventors:
- **INAGAKI Sho**
  **Tsukuba-shi, Ibaraki 305-8560 (JP)**
- **TAKANO Akira**
  **Sakura-shi, Chiba 285-8668 (JP)**
- **KAI Hidetomo**
  **Sakura-shi, Chiba 285-8668 (JP)**
- **NAKAYAMA Atsuyoshi**
  **Tsukuba-shi, Ibaraki 305-8560 (JP)**
- **KAWASAKI Norioki**
  **Tsukuba-shi, Ibaraki 305-8560 (JP)**
- **YAMANO Naoko**
  **Tsukuba-shi, Ibaraki 305-8560 (JP)**

(74) Representative: **Kraus & Lederer PartGmbB**
**Thomas-Wimmer-Ring 15**
**80539 München (DE)**

## (54) COPOLYESTER COMPRISING 3-HYDROXYBUTYRIC ACID AND METHOD FOR PRODUCING SAME

(57) The present invention can provide a copolyester derived from 3-hydroxybutyric acid and a method for producing the copolyester, the copolyester being capable of suppressing hydrolysis and odors by controlling an acid value attributable to a degradation product to a certain value or lower while exhibiting high biodegradability. The copolyester of the present invention includes a 3HB-derived constituent unit (3HB-U), a DA-derived constituent unit (DA-U), and a DO-derived constituent unit (DO-U). The content of the 3HB-U is 1-65 mol% with respect to 100 mol of all constituent units of the copolyester, the average chain length of the 3HB-U in the copolyester is 2-80, and the acid value of the copolyester is 5 or less.

EP 4 567 056 A1

## Description

Technical Field

The present invention relates to a copolyester derived from 3-hydroxybutyric acid and a method for producing the copolyester.

The present application asserts priority rights based on JP Patent Application No. 2022-122988 filed in Japan on August 1, 2022. The disclosure of the patent application of the senior filing date is to be incorporated by reference into the present application.

Background Art

In response to a social issue of global environmental deterioration caused by the mass disposal of plastics, a demand is increasing for sustainable products (packaging materials, films, and the like) made from a resin that is biodegradable in all possible environments (such as seawater, fresh water, soil, and compost).

Examples of the resin that is biodegradable in all the above-mentioned environments include polyhydroxyalkanoate (PHA) produced by bacteria. However, controlling the structure of PHA requires genetic manipulation of bacteria, and a great deal of time and effort is required to develop the resin with desired properties.

When a polymer is synthesized by chemical polymerization of a monomer corresponding to PHA, the degree of freedom of a resin structure is increased, but a 3-hydroxybutyric acid monomer, which is a main constituent unit of PHA, is easily thermally decomposed, whereby problems arise in that a carboxylic acid-based decomposition product is generated, an unpleasant odor is emitted, and hydrolysis easily occurs. Therefore, a PHA-based synthetic resin that leads to a reduction in the amount of the decomposition product is needed.

PTL 1 discloses a biodegradable copolyester obtained by the reaction of 3-hydroxybutyric acid, aliphatic dicarboxylic acid, and aliphatic diol, wherein the content of the 3-hydroxybutyric acid unit in the biodegradable copolyester is 1-20 mol% with respect to all constituent units.

NPL 1 discloses a biodegradable copolyester derived from 3-hydroxybutyric acid, 1,4-butanediol, and succinic acid or adipic acid, wherein the content of the 3-hydroxybutyric acid unit in the biodegradable copolyester is 8.8-49% with respect to all constituent units and the average chain length of the 3-hydroxybutyric acid is 1.2-19. Citation List

Patent Literature

PTL 1: Japanese Unexamined Patent Application Publication No. 2017-25138

Non Patent Literature

NPL 1: Thibaud Debuissy, Eric Pollet, Luc Averous, Ohkita, "Titanium-catalyzed transesterification as a route to the synthesis of fully biobased poly(3-hydroxybutyurateco-butylenedicarboxylate) copolyesters, from their homopolyesters", European Polymer Journal, 90 (2017) 92-104

Summary of Invention

Technical Problem

However, PTL 1 and NPL 1 do not make clear the effects of the content of the constituent unit (3HB-U) derived from 3-hydroxybutyric acid (3HB) with respect to all the constituent units (hereinafter, sometimes referred to as "3HB content") and the average chain length of 3-hydroxybutyric acid (hereinafter, sometimes referred to as "3HB chain length") on biodegradability, and have problems in that a high acid value is attributable to a degradation product of the 3-hydroxybutyric acid, and accordingly an unpleasant odor is emitted and hydrolysis easily occurs.

An object of the present invention is to provide a copolyester derived from 3-hydroxybutyric acid (hereinafter, sometimes referred to as "3HB copolyester") that is capable of suppressing hydrolysis and odors by controlling an acid value caused by a degradation product to a certain value or lower while exhibiting high biodegradability with a specific 3HB content and a specific 3HB chain length, and provide a method for producing the copolyester.

Solution to Problem

The present disclosure includes the following aspects [1] to [10].

[1] A copolyester of 3-hydroxybutyric acid (3HB), dicarboxylic acid (DA), and diol (DO), wherein

the copolyester includes a constituent unit (3HB-U) derived from 3-hydroxybutyric acid (3HB), a constituent unit (DA-U) derived from dicarboxylic acid (DA), and a constituent unit (DO-U) derived from diol(DO),
the dicarboxylic acid (DA) includes aliphatic dicarboxylic acid,
the diol (DO) includes aliphatic diol,
the content of the constituent unit (3HB-U) derived from the 3-hydroxybutyric acid (3HB) is 1-65 mol% with respect to 100 mol of all constituent units of the copolyester,
the average chain length of the constituent unit (3HB-U) derived from the 3-hydroxybutyric acid (3HB) in the copolyester is 2-80, and
the acid value of the copolyester is 5 or less.

[2] The copolyester according to [1], wherein the copolyester is a reaction product of poly(3-hydroxybutyric acid) (PHB) being a polyester of the 3-hydroxybutyric acid (3HB) and a polyester (PAO) of the dicarboxylic acid (DA) and the diol (DO).
[3] The copolyester according to [2], wherein the number average molecular weight of the poly(3-hydroxybutyric acid) (PHB) is 1,000-500,000.
[4] The copolyester according to [2] or [3], wherein the number average molecular weight of the polyester (PAO) is 5,000-500,000.
[5] The copolyester resin according to any one of [2] to [4], wherein the acid value of the polyester (PAO) is 5 or less.
[6] The copolyester according to any one of [1] to [5], wherein the dicarboxylic acid (DA) is aliphatic dicarboxylic acid.
[7] The copolyester according to any one of [1] to [6], wherein the diol (DO) is aliphatic diol.
[8] A method for producing the copolyester according to any one of [1] to 7], the method including the step of causing a reaction between

poly(3-hydroxybutyric acid) (PHB), which is a polyester of the 3-hydroxybutyric acid (3HB), and
a polyester (PAO) of the dicarboxylic acid (DA) and the diol (DO).

[9] A resin composition, including the copolyester according to any one of [1] to [7].
[10] A sheet or a film, including the resin composition according to [9].

Advantageous Effects of Invention

The present invention provides a copolyester derived from 3-hydroxybutyric acid and a method for producing the copolyester, the copolyester being capable of suppressing hydrolysis and odors by controlling an acid value caused by a degradation product to a certain value or lower while exhibiting high biodegradability.

Brief Description of Drawings

FIG. 1 is a diagram illustrating the $^{1}$H-NMR spectrum of a copolyester of Example 1 according to the present invention.
FIG. 2 is a diagram illustrating the $^{13}$C-NMR spectrum of the copolyester of Example 1 according to the present invention.

Description of Embodiments

Hereinafter, the present invention will be described in more detail. Note that the present invention is not limited only to the embodiments described below.
A sign "-" means a range from a value just before the sign "-" to a value just after the sign "-" inclusive.

(Copolyester)

A copolyester of an embodiment according to the present invention (a copolyester of the present embodiment) is a copolyester (sometimes referred to as an HB-DA-DO copolyester) of 3-hydroxybutyric acid (3HB), dicarboxylic acid (DA), and diol (DO). The copolyester of the present embodiment includes a constituent unit (3HB-U) derived from the 3-hydroxybutyric acid (3HB), a constituent unit (DA-U) derived from the dicarboxylic acid (DA), and a constituent unit (DO-U) derived from the diol (DO). The dicarboxylic acid (DA) includes aliphatic dicarboxylic acid and the diol (DO) includes

aliphatic diol. The content of the 3-hydroxybutyric acid (3HB)-derived constituent unit (3HB-U) is 1-65 mol% with respect to 100 mol of all constituent units of the copolyester. The average chain length of the 3-hydroxybutyric acid-derived constituent unit (3HB-U) in the copolyester of the present embodiment is 2-80. The acid value of the copolyester of the present embodiment is 5 or less.

The 3-hydroxybutyric acid (3HB)-derived constituent unit (3HB-U) means one residue of 3-hydroxybutyric acid in a copolymer, specifically means a structure without a hydrogen atom in a hydroxy group of the 3-hydroxybutyric acid and a hydroxy residue in a carboxyl group thereof.

The dicarboxylic acid (DA)-derived constituent unit (DA-U) means one residue of dicarboxylic acid (DA) in the copolymer, specifically means a structure without a hydroxy residue in a carboxyl group of the dicarboxylic acid (DA).

The diol (DO)-derived constituent unit (DO-U) means one residue of diol (DO) in the copolymer, specifically means a structure without a hydrogen atom in a hydroxy group of the diol (DO).

All the constituent units of the copolyester mean the total number of moles of all monomer-derived constituent units constituting the copolyester. When the copolyester of the present embodiment includes the 3-hydroxybutyric acid (3HB)-derived constituent unit (3HB-U), the dicarboxylic acid (DA)-derived constituent unit (DA-U), and the diol (DO)-derived constituent unit (DO-U) and does not include any constituent unit other than the above-mentioned constituent units, all the constituent units of the copolyester mean the total number of moles of the 3-hydroxybutyric acid (3HB)-derived constituent unit (3HB-U), the dicarboxylic acid (DA)-derived constituent unit (DA-U), and the diol (DO)-derived constituent unit (DO-U).

The content (mol%) of the 3-hydroxybutyric acid (3HB)-derived constituent unit (3HB-U) is the percentage of the number of moles of the 3-hydroxybutyric acid (3HB)-derived constituent unit (3HB-U) with respect to the total number of moles of all monomer-derived constituent units constituting the copolyester. A method for evaluating the content will be described later in Examples.

A chain structure of the 3-hydroxybutyric acid-derived unit (3HB-U) means a structure in which one residue of 3-hydroxybutyric acid is continuously ester-bonded to another residue thereof, specifically means that structures each having no hydrogen atom in a hydroxy group of the 3-hydroxybutyric acid and no hydroxy residue in a carboxyl group thereof are continuously ester-bonded to each other.

The average chain length of the 3-hydroxybutyric acid-derived constituent unit (3HB-U) is the average number of 3-hydroxybutyric acid-derived constituent units that are continuously aligned in one polyester molecule. A method for evaluating the average chain length will be described later in Examples.

The acid value of the copolyester is the number of milligrams of potassium hydroxide necessary to neutralize free acids present in 1 g of the copolyester. A method for evaluating the acid value will be described later in Examples.

The copolyester of the present embodiment is preferably a reaction product of the poly(3-hydroxybutyric acid) (PHB) and a polyester (PAO) of the dicarboxylic acid (DA) and the diol (DO).

The poly(3-hydroxybutyric acid) (PHB) being a polyester of 3-hydroxybutyric acid (3HB) is a polyester in which 3-hydroxybutyric acid-derived constituent units are continuously ester-bonded to each other, specifically a polyester having continuously-ester-bonded structures each having no hydrogen atom in a hydroxy group of the 3-hydroxybutyric acid and no hydroxy residue in a carboxyl group thereof.

The polyester (PAO) of the dicarboxylic acid (DA) and the diol (DO) is a polyester in which a dicarboxylic acid (DA)-derived constituent unit and a diol (DO)-derived constituent unit (DO-U) are continuously ester-bonded to each other.

Although not particularly limited, preferred examples of the copolyester of the present embodiment include copolyesters expressed by the following formulae (1)-(3).

[Chemical Formula 1]

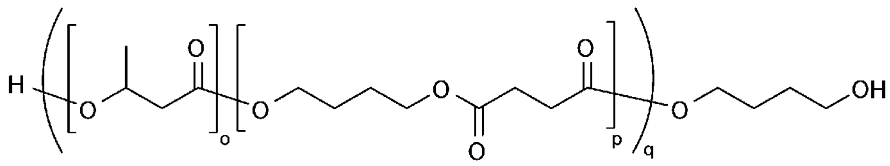 ··· (1)

(In the formula (1), o, p, and q each independently represent a positive integer.)

[Chemical Formula 2]

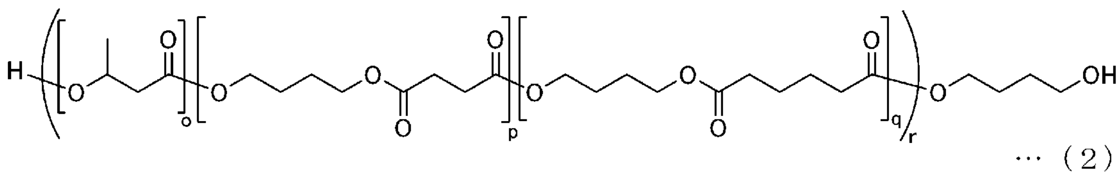

... (2)

(In the formula (2), o, p, q, and r each independently represent a positive integer.)

[Chemical Formula 3]

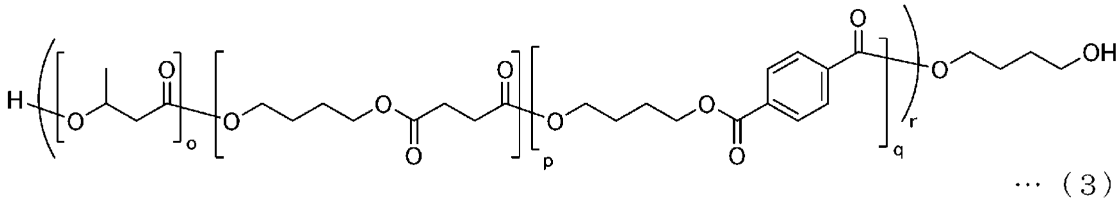

... (3)

(In the formula (3), o, p, q, and r each independently represent a positive integer.)

<3-hydroxybutyric acid (3HB) and 3HB-derived constituent unit (3HB-U)>

The content of the 3-hydroxybutyric acid (3HB)-derived constituent unit (3HB-U) is 1-65 mol%, preferably 2-60 mol%, more preferably 3-50 mol%, still more preferably 5-30 mol%, with respect to 100 mol of all the constituent units of the copolyester of the present embodiment. When the content of the constituent unit (3HB-U) is less than 1 mol%, the biodegradability of the copolyester decreases. When the content of the constituent unit (3HB-U) exceeds 65 mol%, problems arise in that, for example, an acidic degradation product of 3-hydroxybutyric acid is easily generated, an unpleasant odor is emitted, and hydrolysis easily occurs.

The average chain length of the 3-hydroxybutyric acid-derived constituent unit (3HB-U) in the copolyester of the present embodiment is 2-80, preferably 3-70, more preferably 4-50, still more preferably 6-30. When the average chain length of the constituent unit (3HB-U) is less than 2, not only the biodegradability of the copolyester but also the mechanical properties and melting point thereof decrease. When the average chain length of the constituent unit (3HB-U) exceeds 80, the biodegradability of the copolyester decreases.

When the content of the 3-hydroxybutyric acid (3HB)-derived constituent unit (3HB-U) according to the present embodiment is 5-30 mol% with respect to 100 mol of all the constituent units of the copolyester of the present embodiment and the average chain length of the 3-hydroxybutyric acid-derived constituent unit (3HB-U) is 6-30, the copolyester can exhibit high biodegradability, excellent mechanical properties, and a high melting point and also the copolyester can suppress the decomposition of 3-hydroxybutyric acid, which is particularly preferred.

The content of the 3-hydroxybutyric acid (3HB)-derived constituent unit (3HB-U) according to the present embodiment can be measured by the $^{1}$H-NMR spectrum of the copolyester of the present embodiment, specifically can be measured by a method described later in Examples. The content of the constituent unit (3HB-U) can be adjusted by the amount of 3-hydroxybutyric acid (3HB) fed in a raw material for producing the copolyester (or a raw material of an intermediate product) in a method for producing the copolyester of the present embodiment described later.

The average chain length of the 3-hydroxybutyric acid-derived constituent unit (3HB-U) in the copolyester of the present embodiment can be measured by the $^{1}$H-NMR and $^{13}$C-NMR spectra of the copolyester of the present embodiment, specifically can be measured by a method described later in Examples. The average chain length of the constituent unit (3HB-U) can be adjusted, for example, by exercising the control (for example, block polymerization) of an esterification reaction between 3-hydroxybutyric acids, an esterification reaction between 3-hydroxybutyric acid and diol, an esterification reaction between dicarboxylic acid (DA) and diol, or the like in a method for producing the copolyester of the present embodiment described later. Examples of the method include a method of controlling the order in which raw materials are fed and a method of adjusting the speed of reactions. Specific examples of the method include: a method in which a 3-hydroxybutyric acid (3HB) oligomer or polyester (PHB) is obtained first, and then dicarboxylic acid (DA) is allowed to react with diol (DO); and a method in which a 3-hydroxybutyric acid (3HB) oligomer or polyester (PHB) is obtained first, and a polyester (PAO) of dicarboxylic acid (DA) and diol (DO) is obtained, and then the obtained polyester (PHB) is allowed to react with the obtained polyester (PAO).

The 3-hydroxybutyric acid of the present invention to be used can be any of the racemic, (R), and (S) forms. The

(R) form is particularly preferably used because the (R) form can exhibit high biodegradability, excellent mechanical properties, and a high melting point.

<Dicarboxylic acid (DA) and DA-derived constituent unit (DA-U)>

The dicarboxylic acid (DA) according to the present embodiment includes aliphatic dicarboxylic acid. The content of an aliphatic dicarboxylic acid-derived structure in 100 mol of a dicarboxylic acid (DA)-derived structure (DA-U) included in the copolyester of the present embodiment is preferably 20 mol% or higher, more preferably 40 mol% or higher, still more preferably 70 mol% or higher. When the content of the aliphatic dicarboxylic acid-derived structure is 70 mol% or higher, heat resistance, mechanical properties, optical properties, and the like can be achieved as well as biodegradability. When the content of the aliphatic dicarboxylic acid-derived structure is 20 mol% or lower, biodegradability significantly decreases. The dicarboxylic acid (DA) according to the present embodiment is preferably aliphatic dicarboxylic acid. In other words, the dicarboxylic acid (DA)-derived constituent unit (DA-U) according to the present embodiment is preferably an aliphatic dicarboxylic acid-derived constituent unit.

Besides the aliphatic dicarboxylic acid, the dicarboxylic acid (DA) according to the present embodiment may include, for example, alicyclic dicarboxylic acid and aromatic dicarboxylic acid. Besides the aliphatic dicarboxylic acid, the dicarboxylic acid-derived constituent unit (DA-U) according to the present embodiment may include, for example, an alicyclic dicarboxylic acid-derived constituent unit and an aromatic dicarboxylic acid-derived constituent unit.

The dicarboxylic acid (DA) according to the present embodiment can be used alone or in a combination of two or more types.

Examples of the aliphatic dicarboxylic acid include alkanedicarboxylic acids (for example, $C_{1-16}$ alkanedicarboxylic acids, such as oxalic acid, malonic acid, succinic acid, glutaric acid, adipic acid, suberic acid, azelaic acid, sebacic acid, 1,9-nonanedicarboxylic acid, and decanedicarboxylic acid), unsaturated aliphatic dicarboxylic acids (for example, $C_{2-10}$ alkene-dicarboxylic acids, such as maleic acid, fumaric acid, and itaconic acid).

Examples of the alicyclic dicarboxylic acid include cycloalkane dicarboxylic acids (for example, $C_{5-10}$ cycloalkane-dicarboxylic acids such as 1,4-cyclohexane dicarboxylic acid), di- or tri-cycloalkane dicarboxylic acids (such as decalin dicarboxylic acid, norbornane dicarboxylic acid, adamantane dicarboxylic acid, and tricyclodecane dicarboxylic acid), cycloalkene dicarboxylic acids (for example, $C_{5-10}$ cycloalkene-dicarboxylic acids such as cyclohexene dicarboxylic acid), tricycloalkene dicarboxylic acids (such as norbornene dicarboxylic acid), unsaturated alicyclic dicarboxylic acids (such as tetrahydrophthalic acid and tetrahydromethylphthalic anhydride).

Examples of the aromatic dicarboxylic acid include: monocyclic aromatic dicarboxylic acids [for example, $C_{6-10}$ arene-dicarboxylic acids, such as phthalic acid, terephthalic acid, isophthalic acid, and alkyl isophthalic acid (for example, $C_{1-4}$ alkyl isophthalic acids such as 4-methylisophthalic acid)]; polycyclic aromatic dicarboxylic acids [for example, condensed polycyclic aromatic dicarboxylic acids [for example, condensed polycyclic $C_{10-24}$ arene-dicarboxylic acids, preferably condensed polycyclic $C_{10-16}$ arene-dicarboxylic acids, more preferably condensed polycyclic $C_{10-14}$ arene-dicarboxylic acids, such as naphthalene dicarboxylic acids (for example, naphthalene dicarboxylic acids having two carboxyl groups in different rings, such as 1,5-naphthalene dicarboxylic acid, 1,6-naphthalene dicarboxylic acid, 1,7-naphthalene dicarboxylic acid, 1,8-naphthalene dicarboxylic acid, and 2,6-naphthalene dicarboxylic acid; and naphthalene dicarboxylic acids having two carboxyl groups in the same ring, such as 1,2-naphthalene dicarboxylic acid and 1,4-naphthalene dicarboxylic acid), anthracene dicarboxylic acid, and phenanthene dicarboxylic acid], arylarene dicarboxylic acids [for example, $C_{6-10}$-aryl-$C_{6-10}$-arene-dicarboxylic acids such as biphenyldicarboxylic acids (for example, 2,2'-biphenyldicarboxylic acid and 4,4'-biphenyldicarboxylic acid)], diarylalkane dicarboxylic acids [for example, di-$C_{6-10}$-aryl-$C_{1-6}$-alkane-dicarboxylic acids such as diphenylalkane dicarboxylic acid (for example, 4,4'-diphenylmethane dicarboxylic acid)], diarylketone dicarboxylic acids [for example, di-$C_{6-10}$-arylketone-dicarboxylic acids such as diphenylketone dicarboxylic acids (for example, 4.4'-diphenylketone dicarboxylic acid)], and dicarboxylic acids having a fluorene skeleton].

Examples of the dicarboxylic acids having a fluorene skeleton include: dicarboxyfluorene (such as 2,7-dicarboxyfluorene); 9,9-bis(carboxyalkyl)fluorene [for example, 9,9-bis(carboxy C2-6 alkyl)fluorene, such as 9,9-bis(2-carboxyethyl)fluorene and 9,9-bis(2-carboxypropyl)fluorene]; 9-(carboxy-carboxyalkyl)fluorene [for example, 9-(carboxy-carboxy C2-6 alkyl)fluorene, such as 9-(1-carboxy-2-carboxyethyl)fluorene and 9-(2-carboxy-3-carboxypropyl)fluorene]; 9,9-bis(carboxyaryl)fluorene [for example, 9,9-bis(carboxy C6-12 aryl)fluorene, such as 9,9-bis(3-carboxyphenyl)fluorene, 9,9-bis(4-carboxyphenyl) fluorene, 9,9-bis(5-carboxy-1-naphthyl) fluorene, and 9,9-bis(6-carboxy-2-naphthyl)fluorene]; and 9,9-bis(carboxyalkyl-aryl)fluorene [for example, 9,9-bis(carboxy C1-6 alkyl-C6-12 aryl)fluorene, such as 9,9-bis(4-(carboxymethyl) phenyl) fluorene, 9,9-bis(4-(2-carboxyethyl)phenyl)fluorene, 9,9-bis(3-(carboxymethyl) phenyl) fluorene, 9,9-bis(5-(carboxymethyl)-1-naphthyl)fluorene, and 9,9-bis(6-(carboxymethyl)-2-naphthyl)fluorene].

From the viewpoint of biodegradability, among the above-mentioned dicarboxylic acids (DA), aliphatic dicarboxylic acids are preferred, succinic acid, adipic acid, and sebacic acid are further preferred, and succinic acid and adipic acid are particularly preferred.

The DA-derived constituent unit (DA-U) according to the present embodiment can be introduced using an acid anhydride of DA, a halide of DA, or an ester of DA (a methyl ester, an ethyl ester, a monoethylene glycol ester, or the like), besides the dicarboxylic acid (DA).

<Diol (DO) and DO-derived constituent unit (DO-U)>

The diol (DO) according to the present embodiment include aliphatic diol. The content of an aliphatic diol-derived structure in 100 mol of a diol (DO)-derived structure (DO-U) included in the copolyester of the present embodiment is 20 mol% or higher, more preferably 40 mol% or higher, still more preferably 70 mol% or higher. When the content of the aliphatic diol-derived structure is 70 mol% or higher, heat resistance, mechanical properties, optical properties, and the like can be achieved as well as biodegradability. When the content of the aliphatic diol-derived structure is 20 mol% or lower, biodegradability significantly decreases. The diol (DO) according to the present embodiment is preferably aliphatic diol. In other words, the diol (DO)-derived structure (DO-U) according to the present embodiment is preferably the aliphatic diol-derived constituent unit.

Besides aliphatic diol, the diol (DO) according to the present embodiment may include, for example, alicyclic diol and aromatic diol. Besides aliphatic diol, the diol (DO)-derived constituent unit (DA-U) according to the present embodiment may include, for example, an alicyclic diol acid-derived constituent unit and an aromatic diol acid-derived constituent unit.

The diol (DO) according to the present embodiment can be used alone or in a combination of two or more types.

Examples of the aliphatic diol include alkanediols (for example, $C_{2-10}$ alkanediols, such as ethylene glycol, 1,2-propanediol, 1,3-propanediol, 1,2-butanediol, 1,3-butanediol, 1,4-butanediol, 1,3-pentanediol, 1,4-pentanediol, 1,5-pentanediol, 2-methyl-1,3-propanediol, 3-methyl-1,5-pentanediol, neopentyl glycol, 1,6-hexanediol, methyl pentanediol, dimethyl butanediol, and butyl ethyl propanediol), polyalkanediols (for example, di- or tri-$C_{2-4}$-alkanediols, such as diethylene glycol, dipropylene glycol, triethylene glycol, tetraethylene glycol, and tripropylene glycol).

Examples of the alicyclic diol include cycloalkanediols (for example, $C_{5-8}$ cycloalkanediols such as cyclohexanediol), di(hydroxyalkyl)cycloalkane (for example, di(hydroxy $C_{1-4}$ alkyl)$C_{5-8}$ cycloalkane, such as 1,3-bis(2-hydroxypropyl)cyclopentane, 1,3-bis(2-hydroxybutyl)cyclopentane, 1,4-bis(hydroxymethyl)cyclohexane, 1,4-bis(2-hydroxypropyl)cyclohexane, and 1,4-bis(2-hydroxybutyl)cyclohexane), and isosorbide.

Examples of the aromatic diol include dihydroxyarene (such as hydroquinone and resorcinol), di(hydroxyalkyl) arene (for example, di(hydroxy $C_{1-4}$-alkyl) $C_{6-10}$-arene, such as 1,3-benzenedimethanol, 1,4-benzenedimethanol, and 1,4-benzenediethanol), bisphenols (for example, bis (hydroxyphenyl) $C_{1-10}$-alkane, such as biphenol and bisphenol A), alkylene oxide adducts of bisphenols, diol having a fluorene skeleton, and 1,4-bis(2-hydroxyethoxy)benzene.

From the viewpoint of biodegradability, among the above-mentioned diols (DO), aliphatic diol is preferred, ethylene glycol, 1,3-propanediol, 1,4-butanediol, and 1,6-hexanediol are further preferred, and 1,4-butanediol is particularly preferred.

<Other hydroxycarboxylic acid units>

Besides the above-mentioned 3HB-derived constituent unit (3HB-U), DA-derived constituent unit (DA-U), and DO-derived constituent unit (DO-U), the copolyester of the present embodiment may include a hydroxycarboxylic acid (HA)-derived constituent unit (HA-U) other than 3-hydroxybutyric acid, as another constituent unit.

When the copolyester of the present embodiment includes another constituent unit besides the 3HB-derived constituent unit (3HB-U), the DA-derived constituent unit (DA-U), and the DO-derived constituent unit (DO-U), the molar content of the other constituent unit is preferably 60 mol% or lower, more preferably 40 mol% or lower, still more preferably 20 mol% or lower with respect to 100 mol of all the constituent units of the copolyester of the present embodiment. The molar content of the other constituent unit may be 1 mol% or higher with respect to 100 mol of all the constituent units of the copolyester of the present embodiment.

Examples of the other hydroxycarboxylic acid unit include units of hydroxyalkanoic acid, hydroxycycloalkanecarboxylic acid (such as hydroxycyclohexanecarboxylic acid), and hydroxybenzoic acid (such as hydroxyarenecarboxylic acid). These hydroxycarboxylic acid units can be used alone or in a combination of two or more. Among these hydroxycarboxylic acid units, the hydroxyalkanoic acid unit is preferred because of its excellent biodegradability.

Examples of the hydroxyalkanoic acid unit include: units of hydroxy $C_{2-15}$ alkanoic acids that may have a $C_{1-6}$ alkyl group, such as glycolic acid, 2-hydroxypropanoic acid (lactic acid), 3-hydroxypropanoic acid, 2-hydroxybutanoic acid (2-hydroxybutyric acid), 4-hydroxybutanoic acid, 3-hydroxy-3-methyl-butanoic acid, 2-hydroxypentanoic acid (2-hydroxyvaleric acid), 3-hydroxypentanoic acid, 5-hydroxypentanoic acid, 2-hydroxy-2-methyl-pentanoic acid, 3-hydroxyhexanoic acid, 6-hydroxyhexanoic acid, 6-hydroxyheptanoic acid, 3-hydroxyheptanoic acid, 7-hydroxyheptanoic acid, 3-hydroxyoctanoic acid, 8-hydroxyoctanoic acid, 3-hydroxynonanoic acid, 9-hydroxynonanoic acid, 3-hydroxydecanoic acid, and 10-hydroxydecanoic acid; a 12-hydroxystearic acid unit; and a ricinoleic acid unit.

Note that the hydroxyalkanoic acid unit may be a corresponding lactone unit. Examples of the lactone unit include the units of $C_{3-15}$ lactones that may have a di-$C_{1-12}$-alkyl group, such as β-propiolactone, β-dimethylpropiolactone, γ-butyrolactone, γ-dimethylbutyrolactone, δ-valerolactone, and ε-caprolactone.

The above-mentioned hydroxyalkanoic acid units and lactone units can be used alone or in a combination of two or more. From the viewpoint of biodegradability, among the above-mentioned hydroxyalkanoic acid units, there are preferred units of hydroxy $C_{3-10}$ alkanoic acids (units of hydroxy $C_{3-10}$ alkanoic acids other than 3-hydroxybutyric acid), such as 3-hydroxypropanoic acid, 4-hydroxybutanoic acid, 3-hydroxyvaleric acid, 3-hydroxyhexanoic acid, 3-hydroxyheptanoic acid, 3-hydroxyoctanoic acid, 3-hydroxynonanoic acid, 3-hydroxydecanoic acid, 6-hydroxyhexanoic acid, and 10-hydroxydecanoic acid, or the corresponding lactone units.

Examples of a method for introducing the other hydroxycarboxylic acid unit include a method of allowing to react with a polyester (PHB) of 3-hydroxybutyric acid (3HB) in advance, a method of allowing to react the other hydroxycarboxylic acid unit with a polyester (PAO) of the dicarboxylic acid (DA) and the diol (DO) in advance, and a method of adding the other hydroxycarboxylic acid unit at the time of a reaction between a polyester (PHB) of 3-hydroxybutyric acid (3HB) and a polyester (PAO) of the dicarboxylic acid (DA) and the diol (DO).

Examples of the form of the hydroxycarboxylic acid include monomers of hydroxycarboxylic acid, lactones of hydroxycarboxylic acid, polymers of ester-bonded hydroxycarboxylic acids, esterides of hydroxycarboxylic acid (such as methyl ester, ethyl ester, and monoethylene glycol ester), acid halides of hydroxycarboxylic acid, and acid anhydrides of hydroxycarboxylic acid.

<Copolyester Structure and Physical Properties>

The copolyester of the present embodiment is a copolyester of 3-hydroxybutyric acid (3HB), dicarboxylic acid (DA), and diol (DO), preferably a reaction product of the poly(3-hydroxybutyric acid) (PHB) and a polyester (PAO) of the dicarboxylic acid (DA) and the diol (DO).

In the copolyester of the present embodiment, the content of the 3-hydroxybutyric acid (3HB)-derived constituent unit (HB-U) is preferably 2-60 mol% with respect to 100 mol of all the constituent units of the copolyester, the average chain length of the 3-hydroxybutyric acid unit in the copolyester is preferably 2-80, and the acid value of the copolyester is preferably 5 or less. The content of the 3-hydroxybutyric acid (3HB)-derived constituent unit (HB-U) is more preferably 3-50 mol% with respect to 100 mol of all the constituent units of the copolyester, the average chain length of the 3-hydroxybutyric acid unit in the copolyester is more preferably 3-70, and the acid value of the copolyester is more preferably 3 or less. The content of the 3-hydroxybutyric acid (3HB)-derived constituent unit (HB-U) is still more preferably 5-30 mol% with respect to 100 mol of all the constituent units of the copolyester, the average chain length of the 3-hydroxybutyric acid unit in the copolyester is still more preferably 6-30, and the acid value of the copolyester is still more preferably 2 or less.

The acid value (unit: mgKOH/g) of the copolyester of the present embodiment is preferably 5 or less, more preferably 3 or less, still more preferably 2 or less. The acid value of the copolyester of the present embodiment may be 0.1 or more. When the acid value of the copolyester of the present embodiment is 2 or less, hydrolysis and odors can be suppressed.

A method for evaluating the acid value of the copolyester will be described in detail later in Examples.

When measured by gel permeation chromatography (GPC), the lower limit of the number average molecular weight (Mn) of the copolyester of the present embodiment may be 5,000 or higher, 6,000 or higher, 7,000 or higher, 8,000 or higher, or 10,000 or higher, and the upper limit thereof may be 1,000,000 or lower, 500,000 or lower, 100,000 or lower, 50,000 or lower, or 30,000 or lower, in terms of polystyrene. Any combination of these upper and lower limits may be used. When the number average molecular weight (Mn) of the copolyester is 1,000,000 or lower, moldability increases. When the number average molecular weight (Mn) of the copolyester is 5,000 or higher, for example, sufficient mechanical properties are achieved.

When the copolyester of the present embodiment has the above-described structure, biodegradability increases, and thus, both biodegradability and mechanical properties can be highly achieved. The above-mentioned preferred range of the structure can be suitably selected, depending on the application or the like of the copolyester of the present embodiment. For example, biodegradability can be easily adjusted by adjusting the content of the 3-hydroxybutyric acid-derived constituent unit.

<Poly(3-hydroxybutyric acid) (PHB)>

The poly(3-hydroxybutyric acid) (PHB) according to the present embodiment is preferably poly(3-hydroxybutyric acid) obtained by an esterification reaction between 3-hydroxybutyric acids (3HB). The poly(3-hydroxybutyric acid) (PHB) according to the present embodiment includes a poly(3-hydroxybutyric acid) structure obtained by an esterification reaction between 3-hydroxybutyric acids (3HB).

A method for producing the poly(3-hydroxybutyric acid) is not particularly limited, and is similar to, for example, a

polylactic-acid production method described in the following NPL.

NPL A: Shinji Yamada, Aknori Takasu, Sadatsugu Takayama, Kazuhiko Kawamura, "Microwave-assisted solution polycondensation of L-lactic acid using a Dean-Stark apparatus for a non-thermal microwave polymerization effect induced by the electric field", Polym. Chem., 5 (2014) 5283-5288.

Specific examples of the method include a method in which an acid catalyst such as p-toluenesulfonic acid is added to 3-hydroxybutyric acid, and the resultant mixture is subjected to a dehydration-esterification reaction in a solvent such as toluene at a temperature of 80-150°C, and the solvent such as toluene is removed by distillation, and then a solvent such as dichlorobenzene is added thereto, and an alcohol solvent such as methanol is added to precipitate a solid.

The reaction may be performed without a catalyst or may be performed in the presence of a catalyst. Examples of the catalyst to be used for the reaction include a metal catalyst, a base catalyst, a phosphine catalyst, and an acid catalyst.

Examples of the metal catalyst include metal compounds containing, for example, alkali metals (such as sodium), alkaline earth metals (such as magnesium, calcium, and barium), transition metals (such as manganese, zinc, cadmium, lead, cobalt, and titanium), the Group 13 metals in the periodic table (such as aluminum), the Group 14 metals in the periodic table (such as germanium and tin), or the Group 15 metals in the periodic table (such as antimony).

Examples of the base catalyst include tertiary amines (trialkyl amines such as trimethylamine and triethylamine) and quaternary ammonium salts (tetraalkylammonium halides such as tetraethylammonium chloride and tetraethylammonium bromide, and benzyltrialkylammonium halides such as benzyltrimethylammonium chloride).

Examples of the phosphine catalyst include trialkylphosphines (such as trimethylphosphine, triethylphosphine, tri-n-butylphosphine, tri-tert-butylphosphine, and tricyclohexylphosphine) and triarylphosphines (such as triphenylphosphine and tri(o-tolyl)phosphine).

Examples of the acid catalyst include inorganic acids (such as sulfuric acid, hydrogen chloride (or hydrochloric acid), nitric acid, and phosphoric acid) and organic acids (for example, sulfonic acids (alkane sulfonic acids, such as methane sulfonic acid, ethane sulfonic acid, and trifluoromethanesulfonic acid, and arenesulfonic acids such as p-toluene sulfonic acid)).

Examples of the metal compounds include organic acid salts (such as acetates and propionates), inorganic acid salts (such as borates and carbonates), metal oxides (such as germanium oxide), metal chlorides (such as tin chloride), metal alkoxides (such as titanium tetraalkoxide, titanium tetra-t-butoxide, aluminum isopropoxide, zinc t-butoxide, and potassium t-butoxide), and alkyl metals (such as trialkylaluminum). These catalysts can be used alone or in a combination of two or more.

From the viewpoint of enhancing the activity of the esterification reaction, the acid catalyst is preferably used. From the viewpoints of stability in handling and catalyst activity, arenesulfonic acid such as p-toluenesulfonic acid is preferably used.

The amount of the catalyst used is usually within a range of 0.001% to 5.0% by mass with respect to the mass of the 3-hydroxybutyric acid (3HB).

The reaction may be performed in the presence or absence of a solvent. Examples of the solvent include hydrocarbons (aliphatic hydrocarbons, such as hexane, octane, and cyclohexane, and aromatic hydrocarbons, such as toluene, xylene, mesitylene, tetralin, chlorobenzene, o-dichlorobenzene, and 1,2,4-trichlorobenzene), halogenated hydrocarbons (such as dichloromethane, chloroform, carbon tetrachloride, and dichloroethane), ethers (such as dioxane, tetrahydrofuran, and diphenyl ether), ketones (such as acetone and methyl ethyl ketone), esters (such as methyl acetate, ethyl acetate, and butyl acetate), amides (such as dimethylformamide, diethylformamide, dimethylacetamide, diethylacetamide, and N-methylpyrrolidone), sulfoxides (such as dimethyl sulfoxide), and cellosolve acetates (for example, $C_{1-4}$ alkyl cellosolve acetates, such as ethyl cellosolve acetate). These solvents can be used alone or in a combination of two or more.

The reaction may be performed in the atmosphere or an inert gas (such as nitrogen or helium) atmosphere and may be performed under atmospheric pressure or reduced pressure. When water and other substances generated in the esterification reaction are removed by distillation from the reaction system during the reaction, the reaction proceeds more easily.

The lower limit of the number average molecular weight (Mn) of the poly(3-hydroxybutyric acid) (PHB) may be 1,000 or higher, 2,000 or higher, 4,000 or higher, 8,000 or higher, or 10,000 or higher, and the upper limit thereof may be 1,000,000 or lower, 500,000 or lower, 100,000 or lower, 50,000 or lower, or 10,000 or lower. Any combination of these upper and lower limits may be used. When the number average molecular weight (Mn) of the copolyester is 1,000,000 or higher, it becomes significantly difficult to perform the reaction with the polyester (PAO) of the dicarboxylic acid (DA) and the diol (DO). When the number average molecular weight (Mn) of the copolyester is 1,000 or lower, it becomes difficult to control a chain length in the reaction with the polyester (PAO) of the dicarboxylic acid (DA) and the diol (DO).

<Polyester (PAO) of dicarboxylic acid (DA) and diol (DO)>

The polyester (PAO) according to the present embodiment is a reaction product obtained by subjecting a reaction

material including the dicarboxylic acid (DA) and the diol (DO) to an esterification reaction.

The amount of the diol (DO) present in the polyester (PAO) according to the present embodiment is preferably 100-110 mol, more preferably 100.1-105 mol, and still more preferably 100.2-101 mol with respect to 100 mol of the dicarboxylic acid (DA). The reason for this is that, when the amount of the diol (DO) present is 110 mol or more, the molecular weight of the polyester (PAO) is lower, whereby, for example, heat resistance, mechanical properties, and optical properties cannot be exhibited. Furthermore, the reason is that, when the amount of the diol (DO) present is less than 100 mol, an excess of carboxyl groups present in relation to hydroxy groups easily causes a high acid value when the polyester (PAO) is used as a raw material of the copolyester of the present embodiment.

A method for producing the polyester (PAO) of the dicarboxylic acid (DA) and the diol (DO) is not particularly limited. Examples of the method include a method described in the following NPL. NPL B: Shuangbao Peng, Zhiyang Bu, Linbo Wu, Bo-Geng Li, Philippe Dubois, High molecular weight poly(butylene succinate-co-furandicarboxylate) with 10 mol% of BF unit: Synthesis, crystallization-melting behavior and mechanical properties, European Polymer Journal 96 (2017) 248-255.

For example, when the dicarboxylic acid (DA) is aliphatic dicarboxylic acid such as succinic acid and the diol (DO) is aliphatic diol such as 1,4-butanediol, a method for producing a polyester of them is, for example, such that a mixture of 1,4-butanediol and succinic acid is subjected to a reaction at 100-250°C, a catalyst such as titanium tetraisopropoxide is added thereto, and the resultant mixture is subjected to a reaction at 100-250°C to produce a polyester.

The reaction may be performed without a catalyst or may be performed in the presence of a catalyst. Examples of the catalyst to be used for the reaction include an acid catalyst. Examples of the acid catalyst include tin-based catalysts such as monobutyl-tin oxide and dibutyl-tin oxide, titanium-based catalysts such as titanium tetraisopropoxide and titanyl-acetylacetonate, and zirconia-based catalysts such as tetra-butyl-zirconate. A titanium-based catalyst is preferably used because of its ability to enhance the activity of a transesterification reaction and an esterification reaction. Examples of the titanium-based catalyst include titanium tetramethoxide, titanium tetraethoxide, titanium tetraisopropoxide, titanium tetra-n-propoxide, titanium tetra-n-butoxide, tetrakis(2-ethylhexyloxy)titanium, and tetrastearyloxytitanium. Titanium tetraisopropoxide is preferably used from the viewpoints of stability in handling and activity as a catalyst.

The amount of the catalyst used is usually within a range of 0.001% to 5.0% by mass with respect to the total mass of the dicarboxylic acid (DA) and the diol (DO).

The reaction may be performed in the atmosphere or an inert gas (such as nitrogen or helium) atmosphere and may be performed under atmospheric pressure or reduced pressure. When water, the diol (DO), and the like that are generated in the esterification reaction are removed by distillation from the reaction system during the reaction, the reaction proceeds more easily.

Although the reaction time is usually from 1-48 hours, the reaction is preferably allowed to proceed until no more dicarboxylic acid (DA) and diol (DO) as raw materials remain in the reaction system. The reaction can be allowed to proceed, for example, while tracking a decrease in the dicarboxylic acid (DA) by acid value measurements.

The acid value (unit: mgKOH/g) of the polyester (PAO) of the dicarboxylic acid (DA) and the diol (DO) according to the present embodiment is preferably 5 or less, more preferably 3 or less, and still more preferably 2 or less. The reason for this is that, when the acid value of the polyester (PAO) exceeds 5, the acid value of the copolyester of the present embodiment easily becomes higher. Furthermore, when the acid value of the polyester (PAO) is 5 or less, the acid value of the copolyester of the present embodiment can be made lower, whereby hydrolysis and odors can be suppressed.

(Method for producing copolyester)

A method of producing the copolyester according to the present embodiment (sometimes simply referred to as a production method of the present embodiment) is a method for producing the above-described copolyester of the present embodiment.

The production method of the present embodiment includes the step of causing a reaction between poly(3-hydroxybutyric acid) (PHB) and a polyester (PAO) of the dicarboxylic acid (DA) and the diol (DO).

The production method of the present embodiment preferably includes the following first to third steps.

First step: causing a reaction between the 3-hydroxybutyric acids to obtain the poly(3-hydroxybutyric acid) (PHB) ;
Second step: causing a reaction between the dicarboxylic acid (DA) and the diol (DO) to obtain a polyester (PAO) of the dicarboxylic acid (DA) and the diol (DO); and
Third step: causing a reaction between the poly(3-hydroxybutyric acid) (PHB) obtained at the first step and the polyester (PAO) obtained at the second step.

Examples of the production method of the present embodiment include a method in which a mixed solution including the poly(3-hydroxybutyric acid) (PHB) and the polyester (PAO) of the dicarboxylic acid (DA) and the diol (DO) is subjected to an ester exchange reaction to obtain the copolyester of the present embodiment. Examples of a method for

the ester exchange reaction include a method described in NPL 1.

In the case where the dicarboxylic acid (DA) is aliphatic dicarboxylic acid such as succinic acid and the diol (DO) is an aliphatic diol such as 1,4-butanediol, examples of the method for producing the copolyester of the present embodiment include a method in which a mixed solution including the poly(3-hydroxybutyric acid) (PHB) and a polyester (PAO) of aliphatic dicarboxylic acid such as succinic acid and aliphatic diol such as 1,4-butanediol is subjected to an ester exchange reaction to obtain the copolyester of the present embodiment. The temperature for the ester exchange reaction is preferably, for example, 100-250°C.

In the case where an ester exchange reaction between the poly(3-hydroxybutyric acid) (PHB) and the polyester (PAO) of the dicarboxylic acid (DA) and the diol (DO) is performed in the production method of the present embodiment, the feeding molar ratio of the polyester (PHB) to the polyester (PAO) is not particularly limited as long as the content of the constituent unit (3HB-U) of the 3-hydroxybutyric acid (3HB) in the copolyester produced according to the present embodiment, the average chain length of the constituent unit of the 3-hydroxybutyric acid (3HB), and the acid value of the copolyester of the present embodiment each fall within the above-mentioned ranges. For example, the feeding molar ratio of the polyester (PHB) to the polyester (PAO) is usually 1-65 mol%, preferably 2-60 mol%, more preferably 3-50 mol%, and still more preferably 5-30 mol%. When the feeding molar ratio of the poly(3-hydroxybutyric acid) (PHB) to the polyester (PAO) exceeds 65 mol%, the poly(3-hydroxybutyric acid) (PHB) is easily decomposed, which results in a higher acid value of the copolyester of the present embodiment. When the feeding molar ratio of the polyester (PHB) to the polyester (PAO) is less than 1 mol%, the average chain length of the constituent unit of the 3-hydroxybutyric acid (3HB) is extremely short.

As the catalyst for the transesterification reaction, a titanium-based catalyst is preferably used. Examples of the titanium-based catalyst include titanium tetramethoxide, titanium tetraethoxide, titanium tetraisopropoxide, titanium tetra-n-propoxide, titanium tetra-n-butoxide, tetrakis(2-ethylhexyloxy)titanium, and tetrastearyloxytitanium. Titanium tetraisopropoxide is preferably used from the viewpoints of stability in handling and activity as a catalyst.

The amount of a catalyst used is usually within a range of 0.001% to 5.0% by mass with respect to the total mass of the poly(3-hydroxybutyric acid) (PHB) and the polyester (PAO) of the dicarboxylic acid (DA) and the diol (DO).

The reaction may be performed in the atmosphere or an inert gas (such as nitrogen or helium) atmosphere and may be performed under atmospheric pressure or reduced pressure.

The reaction is allowed to proceed until the average chain length of the 3-hydroxybutyric acid (3HB)-derived constituent unit (3HB-U) falls within a range of 2 to 80. The reaction temperature is usually 80-250°C, preferably 100-200°C, more preferably 110-160°C, and still more preferably 125-150°C. The reaction time is usually 1 minute to 48 hours, preferably 5 minutes to 24 hours, more preferably 10 minutes to 12 hours, and still more preferably 15 minutes to 8 hours.

In the production method of the present embodiment, an ester exchange reaction and an esterification reaction can be performed simultaneously. When an ester exchange reaction and an esterification reaction are performed simultaneously, the esterification reaction between the terminal carboxyl group of the poly(3-hydroxybutyric acid) (PHB) or the terminal carboxyl group of the polyester (PAO) and the terminal hydroxy group of the poly(3-hydroxybutyric acid) (PHB) or the terminal hydroxy group of the polyester (PAO) proceeds, whereby both terminal groups in the structural formula of the copolyester can be formed into hydroxy groups. The number of the carboxyl groups decreases, and accordingly, the acid value of the copolyester of the present embodiment can be reduced.

(Polyurethane)

Applied examples of the copolyester of the present embodiment include polyurethane derived from the copolyester of the present embodiment (sometimes referred to as "polyurethane according to the present embodiment").

The polyurethane according to the present embodiment is obtained, for example, by allowing the copolyester of the present invention to react with polyisocyanate. Polyol other than the copolyester of the present embodiment, a chain extender, a chain stopper, and a chemical cross-linking agent may be used in combination with the copolyester and polyisocyanate, as needed. The copolyester of the present embodiment used to obtain the polyurethane is preferably polyester polyol.

Specifically, the polyurethane according to the present embodiment is obtained by allowing polyol to react with polyisocyanate. As the polyol, at least the copolyester of the present embodiment is used. Thus, the polyurethane is a reaction product obtained by a reaction between polyol and polyisocyanate. The polyurethane includes a polyol-derived constituent unit and a polyisocyanate-derived constituent unit, and includes at least a constituent unit derived from the copolyester of the present embodiment.

The copolyester of the present embodiment is preferably polyester polyol.

Examples of the chain extender that can be used include: aliphatic polyol compounds, such as ethylene glycol, diethylene glycol, triethylene glycol, propylene glycol, 1,3-propanediol, 1,3-butanediol, 1,4-butanediol, hexamethylene glycol, saccharose, methylene glycol, glycerin, sorbitol, and neopentyl glycol; aromatic polyol compounds, such as bisphenol A, 4,4'-dihydroxydiphenyl ether, 4,4'-dihydroxydiphenylsulfone, hydrogenated bisphenol A, and hydroquinone;

water; and amine compounds, such as ethylenediamine, 1,2-propanediamine, 1,6-hexamethylenediamine, piperazine, 2-methylpiperazine, 2,5-dimethylpiperazine, isophorondiamine , 4,4'-dicyclohexylmethanediamine, 3,3'-dimethyl-4,4'-dicyclohexylmethanediamine, 1,2-cyclohexanediamine, 1,4-cyclohexanediamine, aminoethylethanolamine, hydrazine, diethylenetriamine, and triethylenetetramine. These chain extenders may be used alone or in a combination of two or more. Among them, aliphatic polyol compounds are preferably used, and neopentyl glycol is more preferably used.

The content of the copolyester of the present embodiment in 100% by mass of all polyols used for the synthesis of the polyurethane is preferably 10-100% by mass, more preferably 50-100% by mass.

Examples of the polyisocyanate include: aromatic polyisocyanates, such as 1,3- and 1,4-phenylene diisocyanates, 1-methyl-2,4-phenylene diisocyanate, 1-methyl-2,6-phenylene diisocyanate, 1-methyl-2,5-phenylene diisocyanate, 1-methyl-2,6-phenylene diisocyanate, 1-methyl-3,5-phenylene diisocyanate, 1-ethyl-2,4-phenylene diisocyanate, 1-isopropyl-2,4-phenylene diisocyanate, 1,3-dimethyl-2,4-phenylene diisocyanate, 1,3-dimethyl-4,6-phenylene diisocyanate, 1,4-dimethyl-2,5-phenylene diisocyanate, diethylbenzene diisocyanate, diisopropylbenzene diisocyanate, 1-methyl-3,5-diethylbenzene diisocyanate, 3-methyl-1,5-diethylbenzene-2,4-diisocyanate, 1,3,5-triethylbenzene-2,4-diisocyanate, naphthalene-1,4-diisocyanate, naphthalene-1,5-diisocyanate, 1-methylnaphthalene-1,5-diisocyanate, naphthalene-2,6-diisocyanate, naphthalene-2,7-diisocyanate, 1,1-dinaphthyl-2,2'-diisocyanate, biphenyl-2,4'-diisocyanate, biphenyl-4,4'-diisocyanate, 3-3'-dimethylbiphenyl-4,4'-diisocyanate, 4,4'-diphenylmethane diisocyanate, 2,2'-diphenylmethane diisocyanate, diphenylmethane-2,4-diisocyanate, and toluene diisocyanate; aliphatic polyisocyanates, such as tetramethylene diisocyanate, 1,6-hexamethylene diisocyanate, dodecamethylene diisocyanate, and trimethylhexamethylene diisocyanate; and alicyclic polyisocyanates, such as 1,3-cyclopentylene diisocyanate, 1,3-cyclohexylene diisocyanate, 1,4-cyclohexylene diisocyanate, 1,3-di(isocyanate methyl)cyclohexane, 1,4-di(isocyanate methyl)cyclohexane, lysine diisocyanate, isophorone diisocyanate, 4,4'-dicyclohexylmethane diisocyanate, 2,4'-dicyclohexylmethane diisocyanate, 2,2'-dicyclohexylmethane diisocyanate, and 3,3'-dimethyl-4,4'-dicyclohexylmethane diisocyanate. These polyisocyanates may be used alone or in a combination of two or more. Among them, 1,6-hexamethylene diisocyanate, isophorone diisocyanate, 4,4'-diphenylmethane diisocyanate, and toluene diisocyanate are more preferably used.

For the purpose of controlling the molecular weight of polyurethane to be obtained, a chain stopper having a single active hydrogen group can be used as necessary. Examples of the chain stopper include: aliphatic monohydroxy compounds having a hydroxyl group, such as methanol, ethanol, propanol, butanol, and hexanol; and aliphatic monoamines having an amino group, such as morpholine, diethylamine, dibutylamine, monoethanolamine, and diethanolamine. These chain stoppers may be used alone, or a mixture of two or more of the chain stoppers may be used.

For the purpose of enhancing the heat resistance and strength of polyurethane to be obtained, a cross-linking agent having three or more active hydrogen groups or isocyanate groups can be used as necessary.

The polyurethane according to the present embodiment can be obtained by a known polyurethane production method. Specific examples of the production method include a method in which polyol, polyisocyanate, and the above-mentioned chain extender are fed and subjected to a reaction to produce polyurethane. The reaction is preferably carried out, for example, at a temperature of 50-100°C for 3-10 hours. The reaction may also be performed in an organic solvent.

Examples of the organic solvent that can be used include: ketone solvents, such as N,N-dimethylformamide, N,N-dimethylacetamide, N-methyl-2-pyrrolidone, methyl ethyl ketone, methyl-n-propyl ketone, acetone, and methyl isobutyl ketone; and ester solvents, such as methyl formate, ethyl formate, propyl formate, methyl acetate, ethyl acetate, isopropyl acetate, isobutyl acetate, isobutyl acetate, and sec-butyl acetate. These organic solvents may be used alone or in a combination of two or more.

The content of a constituent unit derived from the copolyester of the present embodiment in 100% by mass of the polyurethane according to the present embodiment is preferably 10-98% by mass, and more preferably 20-98% by mass.

Thus, an effect tends to be more preferably achieved.

In the present specification, the content of each constituent unit in the polyurethane is measured by NMR.

The lower limit of the number average molecular weight (Mn) of the polyurethane according to the present embodiment may be 5,000 or higher, 6,000 or higher, 7,000 or higher, 8,000 or higher, or 10,000 or higher, and the upper limit thereof may be 1,000,000 or lower, 500,000 or lower, 100,000 or lower, 500,000 or lower, or 15,000 or lower. Any combination of these upper and lower limits may be used.

The number average molecular weight (Mn) of the polyurethane may be 5,000-1,000,000, 6,000-500,000, 7,000-100,000, 8,000-500,000, or 10,000-15,000.

Within the above-mentioned range, an effect tends to be more preferably achieved. In the present specification, the number average molecular weight (Mn) of the polyurethane is a value measured by GPC.

(Resin composition)

Examples of a resin composition of the present embodiment include a thermoplastic resin composition and a thermosetting resin composition, each including the above-described copolyester or polyurethane of the present

embodiment.

<Thermoplastic resin composition>

In the case where the resin composition of the present embodiment is a thermoplastic resin composition, the resin composition may include, for example, another type of resin, a crystallization nucleating agent, a thermal stabilizer, a hydrolysis inhibitor, and other additives, as necessary.

[Crystallization nucleating agent]

The crystallization nucleating agent to be used in the thermoplastic resin composition of the present embodiment may be any crystallization nucleating agent to be used for a thermoplastic resin derived from a biomass resource such as polylactic acid or polybutylene succinate. For example, a talc-based nucleating agent, a nucleating agent including a metal-salt-based material having a phenyl group, and a nucleating agent including a benzoyl compound are preferably used. Other known crystallization nucleating agents, such as lactate-, benzoate-, silica-, and phosphate-based crystallization nucleating agents, may be used.

[Heat stabilizer and hydrolysis inhibitor]

The thermoplastic resin composition of the present embodiment preferably includes a phenolic antioxidant or a phosphite antioxidant as a heat stabilizer for the resin composition, and preferably includes a carbodiimide compound-based hydrolysis inhibitor, such as polycarbodiimide resin (trade name: CARBODILITE, manufactured by Nisshinbo Chemical Inc.). The heat stabilizer and the hydrolysis inhibitor to be added may be one selected from the above-mentioned three additives, but the above-mentioned two heat stabilizers and the above-mentioned hydrolysis inhibitor each have a different function, and therefore all the additives are preferably added. The amount of each of the heat stabilizers and the hydrolysis inhibitor added varies depending on the type, but is commonly preferably approximately 0.1 parts by mass to 5 parts by mass with respect to 100 parts by mass of the thermoplastic resin composition.

[Other additives]

To the thermoplastic resin composition of the present embodiment, a silicone-based flame retardant, an organometallic salt-based flame retardant, an organophosphorus flame retardant, a metal oxide-based flame retardant, or a metal hydroxide-based flame retardant is preferably further added. Thus, flame retardancy is enhanced to suppress the spread of fire, and the flowability of a biodegradable resin composition is enhanced to ensure more excellent formability.

A filler can be added to the thermoplastic resin composition of the present embodiment. Examples of the filler include talc, mica, montmorillonite, and kaolin. These fillers act as crystal nuclei to promote crystallization of the copolyester, whereby the impact strength and heat resistance of a molded article are enhanced. Furthermore, the rigidity of the molded article can be increased.

The thermoplastic resin composition of the present embodiment may be suitably blended with various additives, such as an antioxidant, an anti-blocking agent, a colorant, a flame retardant, a mold release agent, an anti-fogging agent, a surface wettability improver, an incineration aid, a lubricant, a dispersion aid, various surfactants, a plasticizer, a compatibilizer, a weather-resistance improver, an ultraviolet absorber, a processing aid, an antistatic agent, a colorant, a lubricant, and a mold release agent. As the plasticizer, a known plasticizer that is generally used as a plasticizer for polymers can be used without any particular limit. Examples of the plasticizer include a polyester plasticizer, a glycerin-based plasticizer, a polycarboxylic acid ester-based plasticizer, a polyalkylene glycol-based plasticizer, and an epoxy-based plasticizer. The compatibilizer is not particularly limited if the compatibilizer functions as a compatibilizer for a copolymer A and a copolymer B. Examples of the compatibilizer include an inorganic filler, a glycidyl compound, a polymer compound grafted or copolymerized with acid anhydride, and an organometallic compound. One or two or more of these compatibilizers may be used. When the above-mentioned additives are mixed and kneaded, heat resistance, bending strength, impact strength, flame retardancy, and the like are improved, and therefore, application to a molded article, such as casing for electronic devices typified by notebook computers and cellular phones, is promoted.

Various types of conventionally known fillers can be blended as the filler. As a functional additive, for example, a compound fertilizer, a soil conditioner, or a plant activator can be added. The fillers are broadly classified into inorganic fillers and organic fillers. These fillers can be used alone, or a mixture of two or more of the fillers can be used.

Examples of the inorganic fillers include: silicates, such as anhydrous silica, mica, talc, titanium oxide, calcium carbonate, diatomaceous earth, alophene, bentonite, potassium titanate, zeolite, sepiolite, smectite, kaolin, kaolinite, glass, limestone, carbon, warastainite, calcined pearlite, calcium silicate, and sodium silicate; hydroxides, such as

aluminum oxide, magnesium carbonate, and calcium hydroxide; and salts, such as ferric carbonate, zinc oxide, iron oxide, aluminum phosphate, and barium sulfate. The content of the inorganic filler in the entirety of the composition is usually 1-80% by weight, preferably 3-70% by weight, and more preferably 5-60% by weight.

Examples of the organic fillers include raw starch, processed starch, pulp, chitin/chitosan, coconut shell powder, wood powder, bamboo powder, bark powder, and powders of kenaf and straw. These fillers can be used alone, or a mixture of two or more of the fillers can be used. The amount of the organic filler added in the entirety of the composition is usually 0.01-70% by weight.

For the preparation of the composition, any conventionally known mixing/kneading technique can be applied. Examples of a mixer that can be used include blenders, such as a horizontal-cylindrical mixer, a V-shaped mixer, a double-conical mixer, a ribbon blender, and a super mixer, and various continuous mixers. Examples of a kneader that can be used include batch-type kneaders such as a roll mixer and an internal mixer, a one-stage or two-stage continuous kneader, a twin-screw extruder, and a single-screw extruder. Examples of a kneading method include a method in which various additives, the filler, and the thermoplastic resin are each heated and melted, and then added and blended. Blending oils or the like can be used to uniformly disperse the above-mentioned various additives.

<Thermosetting resin composition>

When the resin composition of the present embodiment is a thermosetting resin composition, the resin composition includes, for example, another resin, the copolyester of the present embodiment having a reactive group such as a hydroxyl group or a carboxyl group as a thermosetting resin base, and further includes a curing agent, such as an isocyanate curing agent or a polyamine curing agent, that is capable of thermally reacting with the reactive group.

Examples of the curing agent according to the present embodiment include polyisocyanates having an aromatic structure in a molecular structure thereof, such as tolylene diisocyanate, diphenylmethane diisocyanate, polymeric diphenylmethane diisocyanate, 1,5-naphthalene diisocyanate, triphenylmethane triisocyanate, and xylylene diisocyanate, and compounds in which a part of an isocyanate group of the above-mentioned polyisocyanates is modified with carbodiimide; allophanate compounds derived from the above-mentioned polyisocyanates; polyisocyanates having an alicyclic structure in a molecular structure thereof, such as isophorone diisocyanate, 4,4'-methylenebis(cyclohexylisocyanate), and 1,3-(isocyanatomethyl)cyclohexane; linear aliphatic polyisocyanates, such as 1,6-hexamethylene diisocyanate, lysine diisocyanate, and trimethylhexamethylene diisocyanate, and allophanate compounds thereof; isocyanurates of the above-mentioned polyisocyanates; allophanates derived from the above-mentioned polyisocyanates; biurets derived from the above-mentioned polyisocyanates; trimethylolpropane-modified adducts; polyfunctional isocyanates, such as polyisocyanates as reaction products of the above-mentioned various types of polyisocyanates and polyol components; polyethylene polyamines, such as ethylenediamine, diethylenetriamine, triethylenetetramine, tetraethylenepentamine, pentaethylenehexamine, hexaethyleneheptamine, heptaethyleneoctamine, octaethylene nonamine, nonaethylene decamine, piperazine, and N-aminoalkylpiperazine having an alkyl chain having 2 to 6 carbon atoms; and amine compounds, such as 3-aminomethyl-3,5,5-trimethylcyclohexylamine (isophoronediamine or IPDA).

<Cured product of resin composition>

A cured product of the resin composition of the present embodiment is a cured product of a resin composition as the above-mentioned thermoplastic resin composition or a cured product of a polyester composition as the above-mentioned thermosetting resin composition.

The copolyester of the present embodiment can be used for a variety of applications. Specifically, the copolyester can be used in a wide range of applications, including artificial leather, synthetic leather, shoes, thermoplastic resin, resin foam, thermosetting resin, paints, laminating adhesives, elastic fiber, urethane raw materials, automotive parts, and sporting goods. When the copolyester of the present embodiment having excellent biodegradability is used, the resultant product in the above-mentioned applications has excellent biodegradability.

The polyurethane of the present embodiment can be used for a variety of applications. Specifically, the polyurethane can be used in a wide range of applications, including artificial leather, synthetic leather, shoes, thermoplastic resin, resin foam, thermosetting resin, paints, laminating adhesives, vibration isolators, damping materials, automotive parts, sporting goods, fiber treatment agents, and binders. When the copolyester of the present embodiment having excellent biodegradability is used, the resultant product in the above-mentioned applications has excellent biodegradability.

The resin composition of the present embodiment can be used for a variety of applications. Specifically, the resin composition can be used in a wide range of applications, including artificial leather, synthetic leather, shoes, thermoplastic resin, resin foam, thermosetting resin, paints, laminating adhesives, vibration isolators, damping materials, automotive parts, sporting goods, fiber treatment agents, and binders. When the copolyester of the present embodiment having excellent biodegradability is used, the resultant product in the above-mentioned applications has excellent biodegradability.

(Coating agent)

A coating agent includes the copolyester of the present embodiment and further includes other components such as other resins, water, and an organic solvent, as necessary.
The coating agent can be applied onto a variety of substrates. An example of the application of the coating agent will be described below.
The coating agent is used, for example, for surface coating of a base material of a food packaging container. Examples of the base material include plastic films, such as a styrene resin film, a polyolefin resin film, a polyester resin film, and a nylon resin film, and laminates thereof. Examples of the base material further include paper, a metalized film, and aluminum foil. The coating agent is preferably used for a biodegradable base material. Examples of the biodegradable base material include paper, a polyester film, a polyolefin film, and a starch film.
The coating agent can be used, for example, as an ink or an adhesive.

(Ink)

The ink includes the copolyester of the present embodiment and a colorant and further includes other components, such as a pigment dispersant, water, and an organic solvent, as necessary.
The ink is, for example, printing ink.
The ink may be, for example, water-based ink or ink containing no water (solvent-based ink).

(Adhesive)

The adhesive includes the copolyester of the present embodiment and further includes other components, such as other resins, a curing agent, and an organic solvent, as necessary.
The adhesive can also be used as a laminating adhesive composition used for laminating the above-mentioned various base materials to produce a composite film mainly used for packaging materials for food, pharmaceuticals, detergents, and the like.
Examples of the adhesive that can be used include a two-part curable adhesive including the copolyester of the present embodiment, polyester polyol, and polyisocyanate, and a one-part adhesive including acrylic resin, urethane resin, and an ethylene-vinyl acetate copolymer. These adhesives can be used as a solvent-based, non-solvent-based, water-based, or alcohol-based adhesive, as necessary.

(Sheet)

A sheet is made of the above-described resin composition of the present embodiment. Besides the copolyester of the present embodiment, the resin composition may include other resins and various additives. Examples of the additives include a plasticizer, an antistatic agent, an antioxidant, an ultraviolet absorber, a lubricant, an antiblocking agent, and a heat stabilizer.
Examples of the sheet include an unstretched sheet, a biaxially stretched sheet, and a foamed sheet.
The application of the sheet is not particularly limited, and the sheet can be used for a wide range of applications, including food packaging containers, construction materials, household appliances, and miscellaneous goods, for example.

(Film)

The film is made of the above-described resin composition of the present embodiment. Besides the copolyester of the present embodiment, the resin composition may include other resins and various additives. Examples of the additives include a plasticizer, an antistatic agent, an antioxidant, an ultraviolet absorber, a lubricant, an antiblocking agent, and a heat stabilizer.
Examples of the film include an unstretched film, a biaxially stretched film, and a uniaxially stretched film. The film can be formed by melting pellets of a raw material of the film in an extruder and then forming a film by T-die extrusion or blown extrusion method. In the case of the T-die extrusion, a biaxially stretched film is obtained by longitudinal stretching making use of a speed difference between rolls and transverse stretching using a tenter.

(Laminate)

A laminate includes at least one selected from the sheet and the film of the present embodiment and further includes other constituents such as a printing layer and a resin film, as necessary.

The laminate is obtained, for example, by laminating a film or a sheet on one side or both sides of at least one selected from the sheet and the film of the present embodiment to enhance mechanical strength and chemical resistance, for example. Specifically, the laminate is obtained by heat-laminating a polystyrene-based blown extrusion film on at least one of the front and back sides of the sheet or the film, or by laminating an olefin-based film (CPP) thereon with an adhesive.

The adhesive to be used is not particularly limited and may be, for example, the adhesive of the present embodiment or any other known adhesive.

(Molded article)

A molded article is obtained by forming at least one selected from the sheet, the film, and the laminate of the present embodiment.

The molded article is obtained, for example, by thermoforming the sheet, the film, and the laminate of the present embodiment. Examples of a thermoforming method include hot plate contact heating forming, vacuum forming, vacuum pressure air forming, and plug-assist forming. In particular, indirect heat forming using an infrared heater as a heat source is preferably used.

[Examples]

Hereinafter, the present invention will be described in detail by way of examples, but the present invention is not limited thereby.

<Measurement of number average molecular weight (Mn) and weight average molecular weight (Mw)>

In Examples and Comparative Examples, the molecular weight of a resin was a value measured using gel permeation chromatography (GPC) under the following conditions.

Measuring devices:

Waters 600 Controller as a system controller
Waters Model Code 60F as a liquid-transfer pump
Waters 2414 as an RI (differential refractometer) detector
Waters 717plus Autosampler as an autosampler Data processing: Waters Empower3

Measurement conditions:

column temperature of 40°C
chloroform ($CHCl_3$) as an eluent
flow rate of 1.0 ml/min

Standard: Polystyrene
Columns:

Shodex GPC LF-G, 1 column
Shodex GPC LF-804, 4 columns

Sample: a sample (100 μl) obtained by filtering 0.4% by mass of a chloroform solution in terms of resin solids through a microfilter

<Measurement of $^1H$-NMR spectrum>

Measuring device: "JNM-ECM400S", manufactured by JEOL RESONANCE
Magnetic field strength: 400 MHz

Solvent: deuterated chloroform
Sample concentration: 100 mg/1.0 mL

<$^{13}$C-NMR spectrum>

Measuring device: "JNM-ECM400S", manufactured by JEOL RESONANCE
Magnetic field strength: 100 MHz
Solvent: deuterated chloroform
Sample concentration: 100 mg/1.0 mL

<Calculation of 3-hydroxybutyric acid content>

A $^{1}$H-NMR spectrum was measured by the method described above. FIG. 1 is a diagram illustrating the $^{1}$H-NMR spectrum of the copolyester of Example 1.

The 3HB content was calculated for peaks on the $^{1}$H-NMR spectrum, based on a formula below.
3HB content = (integral value at 5.2 ppm) / {(integral value at 4.1 ppm - integral value at 3.6 ppm) / 4 + integral value at 5.2 ppm + integral value at 2.6 ppm / 4}

<Evaluation of average chain length>

A $^{13}$C-NMR spectrum was measured by the method described above. FIG. 2 is a diagram illustrating the $^{13}$C-NMR spectrum of the copolyester of Example 1.

[Peak Attribution]

The attribution of triad (a combination of three monomer chains) peaks on the $^{13}$C-NMR spectrum was performed with reference to NPL 1.

<Calculation of average chain length>

An average chain length was calculated, based on the formulae below.

[Formula 1]

$$L_{BS} = 1 + \frac{2(I_{B-S-B} + I_{H-S-B})}{I_{S-H-B} + I_{H-H-B} + I_{B-S-H} + I_{H-S-H}} \quad \cdots (4)$$

$$L_{3HB} = 1 + \frac{2(I_{S-H-S} + I_{H-H-H})}{I_{S-H-B} + I_{H-H-B} + I_{B-S-H} + I_{H-S-H}} \quad \cdots (5)$$

$$\chi = \frac{1}{L_{BS}} + \frac{1}{L_H} \quad \cdots (6)$$

In the formulae (4)-(5), S, B, H, $L_{BS}$, $L_{3HB}$, $I_{X-Y-Z}$, and $\chi$ represent as follows.

S: succinic acid-derived constituent unit

B: 1,4-butanediol-derived constituent unit

H: 3-hydroxybutyric acid-derived constituent unit

$I_{X\text{-}Y\text{-}Z}$: a peak integral value derived from a triad of constituent units X, Y, and Z (wherein X, Y, and Z are any of S, B, and H)

$L_{BS}$: the average chain length of a dyad (a combination of two monomer chains) of a 1,4-butanediol-derived constituent unit and a succinic acid-derived constituent unit.

$L_{3HB}$: the average chain length of a 3-hydroxybutyric acid-derived constituent unit

$\chi$: an index indicating the randomness of the copolyester and having a value between 0 and 2 inclusive.

<Evaluation of biodegradability>

A biodegradability evaluation was conducted with reference to a method described in "2.3. Biodegradation with seawater by BOD method" in the following NPL A. The evaluation method described in NPL A was such that a test was conducted by replacing activated sludge as a seed source in JIS K6950 with seawater.

NPL C: Atsuyoshi Nakayama*, Naoko Yamano, Norioki Kawasaki, Biodegradation in seawater of aliphatic polyesters, Polymer Degradation and Stability 166 (2019) 290-299.

[Seed source]

Seawater collected at Nanko, Osaka (latitude: 34.634905, longitude: 135.418919) was used as a collected seed source.

[Test conditions]

Biodegradability measurement method: Soda lime (a carbon dioxide absorbent) and a pressure sensor (OxiTop-IDS (registered trademark), manufactured by WTW) were attached to a test bottle, and biochemical oxygen demand (BOD) was measured under the following conditions to calculate biodegradability.

Incubation temperature: 27°C, at dark place

Incubation period: 28 days

[Calculation of biodegradability]

The biodegradability of a sample was calculated, based on the following formula.

$$\text{Biodegradability (\%)} = (BOD_0 - BOD_B) / ThOD \times 100$$

$BOD_0$: biochemical oxygen demand of sample (measured value: mg)

$BOD_B$: average biochemical oxygen demand in blank test (measured value: mg)

ThOD: theoretical oxygen demand necessary for complete oxidation of sample (calculated value: mg)

<Acid value measurement>

Measurements were conducted using a method described in JIS K 0070:1992. Specifically, approximately 1 g of a sample was weighed into an Erlenmeyer flask, and 20 mL of chloroform was added so that the sample was dissolved in the chloroform, and a phenolphthalein reagent was added as an indicator. Subsequently, the resultant solution was titrated with a 0.1 N alcoholic potassium hydroxide solution until the solution turned pink, and the acid value of the solution was determined by the following formula.

$$\text{Acid value (mg KOH/g)} = (5.611 \times a \times F) / S$$

S: sample volume (g)

a: amount of 0.1 N alcoholic potassium hydroxide solution consumed (mL)

F: factor of 0.1 N alcoholic potassium hydroxide solution

<Evaluation of stability against hydrolysis>

1 g of a sample was placed in a glass bottle, 2% by mass of water was added thereto, and the glass bottle was tightly closed, and then the solution was left standing in a thermostatic chamber set at 50°C for one week. The weight average molecular weight (Mw) of the sample was measured by a GPC method before and after heating, and the molecular weight retention (%) was calculated using the following formula.

Molecular weight retention = {(Mw before heating) - (Mw after heating)} / (Mw before heating) × 100

Based on the molecular weight retention, stability against hydrolysis was evaluated. The following is an evaluation criterion.

Evaluation criterion:

○: 80-100% of molecular weight retention
×: less than 80% of molecular weight retention

<Odor evaluation>

A sample was placed in a glass bottle and an odor was subjected to a sensory evaluation. The following is an evaluation criterion.

Evaluation criterion:

Absent: odorless
Present: malodorous

(Synthesis Example 1)

"Synthesis of poly(3-hydroxybutyric acid)"

To a 100-mL three-necked flask equipped with a nitrogen inlet tube, a thermometer, a stirrer, and a dean-stark trap, 21.3 g (0.205 mol) of 3HB, 0.380 g (0.00200 mol) of p-toluenesulfonic acid monohydrate, and 40 mL of toluene were added and heating was conducted at an internal temperature of 95°C for 19 hours. The toluene was removed, and 60 mL of o-dichlorobenzene was added. The pressure was reduced to produce reflux, and heat-refluxing was performed at 95°C for 18 hours. The reaction liquid was cooled to room temperature, 100 mL of methanol was added to precipitate solids, and filtration was performed to obtain 12.7 g of poly(3-hydroxybutyric acid).

Average molecular weights were measured using the above-described average molecular weight measurement method. The number average molecular weight Mn was 3,400 and the weight average molecular weight Mw was 7,300.

Using the above-described $^1$H-NMR measurement method, a $^1$H-NMR spectrum was measured. The result is as follows.

$^1$H-NMR $\delta$($CDCl_3$): 1.25(m,3H), 2.55 (m, 2H), 4.15(m, tr), 5.23(m,1H), 5.75(d,trace amount), 6.95(m, trace amount)

(Synthesis Example 2)

"Synthesis of polyester of succinic acid and 1,4-butanediol (poly(butylene succinate): PBS)"

To a separable flask equipped with a nitrogen inlet tube, a thermometer, a cooling tube, and a mechanical stirrer, 478 g (5.30 mol) of 1,4-butanediol and 559 g (4.73 mol) of succinic acid (the number of moles of 1,4-butanediol with respect to 100 mol of succinic acid = 112 mol) were added, and the temperature was raised to 160°C over 1 hour. The temperature was further raised to 200°C over 1 hour. After water distillation was completed, the cooling tube was removed, and 0.01% by mass of titanium tetraisopropoxide was added, and the resultant mixture was held at 200°C. At the time when the acid value reached 1 or lower, the mixture was allowed to cool and taken out to obtain PBS. The number of moles of a 1,4-butanediol-derived structure with respect to 100 mol of a succinic acid-derived structure in PBS was 101.7 mol.

Average molecular weights were measured using the above-described average molecular weight measurement method. The number average molecular weight Mn was 10,200 and the weight average molecular weight Mw was 38,000.

The acid value was measured using the above-described acid value measurement method. As a result, the acid value was 0.44 mg-KOH/g.

Using the above-described $^1$H-NMR measurement method, a $^1$H-NMR spectrum was measured. The result is as follows.

$^1$H-NMR $\delta$($CDCl_3$): 1.70(t,2H), 2.62(s,4H), 3.23(m,tr,terminal-CH2OH), 4.12(t,2H)

(Synthesis Example 3)

PBS was obtained in the same manner as in Synthesis Example 2, except that 270 g (3.00 mol) of 1,4-butanediol and 338 g (2.86 mol) of succinic acid (the number of moles of 1,4-butanediol with respect to 100 mol of succinic acid = 104.7 mol) were used. The number of moles of a 1,4-butanediol-derived structure with respect to 100 mol of a succinic acid-derived structure in PBS was 100.9 mol.

Average molecular weights were measured using the above-described average molecular weight measurement method. The number average molecular weight Mn was 19,800 and the weight average molecular weight Mw was 42,000.

The acid value was measured using the above-described acid value measurement method. As a result, the acid value was 0.52 mg-KOH/g.

(Example 1)

Into a test tube equipped with a stirrer and a nitrogen inlet tube, 0.41 g (4.8 mmol) of poly(3-hydroxybutyric acid) obtained in Synthesis Example 1, 5.70 g (66.2 mmol) of PBS obtained in Synthesis Example 3, and 0.01% by mass of titanium tetraisopropoxide were fed. While removing moisture produced by an esterification reaction under reduced pressure, an ester exchange reaction was allowed to proceed at a temperature of 140°C for 15 minutes. Thus, as the copolyester of the present embodiment, a copolyester of 3-hydroxybutyric acid-succinic acid-1,4-butanediol was obtained. The feeding mass ratio of PHB to PBS was 6.7/93.3. Average molecular weights were measured using the above-described average molecular weight measurement method. The number average molecular weight Mn was 7,100 and the weight average molecular weight Mw was 17,400.

The content of a 3-hydroxybutyric acid-derived structure was measured by the method described above in <Calculation of 3-hydroxybutyric acid content>. The result is illustrated in Table 1.

The average chain length of the 3-hydroxybutyric acid-derived structure was measured by the method described above in <Evaluation of average chain length>. The result is illustrated in Table 1.

Biodegradability was evaluated by the method described above in <Evaluation of biodegradability>. The result is illustrated in Table 1.

An acid value was evaluated by <Measurement of acid value> described above. The result is illustrated in Table 1.

(Example 2)

As the copolyester of the present embodiment, a copolyester of 3-hydroxybutyric-acid-succinic-acid-1,4-butanediol was obtained in the same manner as in Example 1, except that the ester exchange reaction was allowed to proceed at a temperature of 130°C for 15 minutes and the feeding mass ratio of poly(3-hydroxybutyric acid) obtained in Synthesis Example 1 and PBS obtained in Synthesis Example 3 was a feeding mass ratio provided by Table 1. Average molecular weights were measured using the above-described average molecular weight measurement method. The number average molecular weight Mn was 7,600 and the weight average molecular weight Mw was 20,100. The content of 3-hydroxybutyric acid, an average chain length, an acid value, and biodegradability were evaluated in the same manner as in Example 1. The results are illustrated in Table 1.

(Example 3)

As the copolyester of the present embodiment, a copolyester of 3-hydroxybutyric-acid-succinic-acid-1,4-butanediol was obtained in the same manner as in Example 1, except that the ester exchange reaction was allowed to proceed at a temperature of 150°C for 2 hours and the feeding mass ratio of poly(3-hydroxybutyric acid) obtained in Synthesis Example 1 and PBS obtained in Synthesis Example 3 was a feeding mass ratio provided by Table 1. Average molecular weights were measured using the above-described average molecular weight measurement method. The number average molecular weight Mn was 10,400 and the weight average molecular weight Mw was 17,800. The content of 3-hydroxybutyric acid, an average chain length, an acid value, and biodegradability were evaluated in the same manner as in Example 1. The results are illustrated in Table 1.

(Example 4)

As the copolyester of the present embodiment, a copolyester of 3-hydroxybutyric-acid-succinic-acid-1,4-butanediol was obtained in the same manner as in Example 1, except that the ester exchange reaction was allowed

to proceed at a temperature of 150°C for 15 minutes and the feeding mass ratio of poly(3-hydroxybutyric acid) obtained in Synthesis Example 1 and PBS obtained in Synthesis Example 3 was a feeding mass ratio provided by Table 1. Average molecular weights were measured using the above-described average molecular weight measurement method. The number average molecular weight Mn was 7,600 and the weight average molecular weight Mw was 16,100. The content of 3-hydroxybutyric acid, an average chain length, an acid value, and biodegradability were evaluated in the same manner as in Example 1. The results are illustrated in Table 1.

(Example 5)

As the copolyester of the present embodiment, a copolyester of 3-hydroxybutyric-acid-succinic-acid-1,4-butanediol was obtained in the same manner as in Example 1, except that the ester exchange reaction was allowed to proceed at a temperature of 150°C for 2 hours and the feeding mass ratio of poly(3-hydroxybutyric acid) obtained in Synthesis Example 1 and PBS obtained in Synthesis Example 2 was a feeding mass ratio provided by Table 1. Average molecular weights were measured using the above-described average molecular weight measurement method. The number average molecular weight Mn was 7,500 and the weight average molecular weight Mw was 19,200. The content of 3-hydroxybutyric acid, an average chain length, an acid value, and biodegradability were evaluated in the same manner as in Example 1. The results are illustrated in Table 1.

(Comparative Example 1)

A copolyester of 3-hydroxybutyric-acid-succinic acid-1,4-butanediol was obtained in the same manner as in Example 1, except that the ester exchange reaction was allowed to proceed at a temperature of 175°C for 2 hours and the feeding mass ratio of poly(3-hydroxybutyric acid) obtained in Synthesis Example 1 and PBS obtained in Synthesis Example 3 was a feeding mass ratio provided by Table 1. Average molecular weights were measured using the above-described average molecular weight measurement method. The number average molecular weight Mn was 13,000 and the weight average molecular weight Mw was 25,600.

The content of 3-hydroxybutyric acid, an average chain length, an acid value, and biodegradability were evaluated in the same manner as in Example 1. The results are illustrated in Table 1.

(Comparative Example 2)

A copolyester of 3-hydroxybutyric-acid-succinic acid-1,4-butanediol was obtained in the same manner as in Example 1, except that the ester exchange reaction was allowed to proceed at a temperature of 175°C for 2 hours and the feeding mass ratio of poly(3-hydroxybutyric acid) obtained in Synthesis Example 1 and PBS obtained in Synthesis Example 3 was a feeding mass ratio provided by Table 1. Average molecular weights were measured using the above-described average molecular weight measurement method. The number average molecular weight Mn was 8,200 and the weight average molecular weight Mw was 15,200.

The content of 3-hydroxybutyric acid, an average chain length, an acid value, and biodegradability were evaluated in the same manner as in Example 1. The results are illustrated in Table 1.

(Comparative Example 3)

A copolyester of 3-hydroxybutyric-acid-succinic-acid-1,4-butanediol was obtained using a method described in Example 1 of PTL 1.

The content of 3-hydroxybutyric acid, an average chain length, an acid value, and biodegradability were evaluated in the same manner as in Example 1 of the present application. The results are illustrated in Table 1.

(Comparative Example 4)

A copolyester of 3-hydroxybutyric-acid-succinic-acid-1,4-butanediol that is provided by Table 3 of NPL 1, namely, Copo-BS-12, was obtained by a method described in NPL 1.

The content of 3-hydroxybutyric acid, an average chain length, an acid value, and biodegradability were evaluated in the same manner as in Example 1 of the present application. The results are illustrated in Table 1.

(Comparative Example 5)

A copolyester of 3-hydroxybutyric-acid-succinic-acid-1,4-butanediol that is provided by Table 3 of NPL 1, namely, Copo-BS-6, was obtained by a method described in NPL 1.

The content of 3-hydroxybutyric acid, an average chain length, an acid value, and biodegradability were evaluated in the same manner as in Example 1 of the present application. The results are illustrated in Table 1.

[Table 1]

| | Feeding mass ratio of PHB to PBS | Evaluation of copolyester | | | | | |
|---|---|---|---|---|---|---|---|
| | | 3HB content (mol%) | Average chain length of 3HB | Acid value (mg-KOH/g) | Biodegradability (%) | Stability | Presence or absence of odor |
| Ex. 1 | 6.7/93.3 | 6.7 | 6.2 | 2.6 | 40 | ○ | Absent |
| Ex. 2 | 6.7/93.3 | 6.4 | 28 | 2.1 | 30 | ○ | Absent |
| Ex. 3 | 14.6/85.4 | 14 | 2.2 | 1.2 | 16 | ○ | Absent |
| Ex. 4 | 14.6/85.4 | 14.3 | 5.9 | 1.1 | 28 | ○ | Absent |
| Ex. 5 | 50/50 | 48 | 71 | 1.7 | 14 | ○ | Absent |
| Comp. Ex. 1 | 6.4/93.6 | 6.3 | 1 | 2.6 | 2 | ○ | Absent |
| Comp. Ex. 2 | 14.7/85.3 | 13.2 | 1.1 | 2.3 | 7 | ○ | Absent |
| Comp. Ex. 3 | - | 15 | 1 | 29.1 | 0 | × | Present |
| Comp. Ex. 4 | 9.1/90.9 | 8.2 | 1.2 | 5.9 | 0 | × | Present |
| Comp. Ex. 5 | 29.6/70.4 | 23 | 7.3 | 18.2 | 0 | × | Present |

(Discussion)

When a highly biodegradable 3-hydroxybutyric-acid-derived structure is arranged in a copolyester with a specific average chain length, an enzyme secreted by microorganisms in the environment causes the cleavage of a 3-hydroxybutyrate-derived constituent unit to proceed, whereby the copolyester becomes an oligomer metabolizable by the microorganisms and biodegradation of the entirety of the copolyester is caused.

Furthermore, hydrolysis and odors can be suppressed by controlling an acid value to a certain value or lower.

Industrial Applicability

The copolyester of the present embodiment has a 3-hydroxybutyric acid-derived structure, and, while exhibiting biodegradability, the copolyester can control an acid value attributable to a degradation product to a certain value or lower, and thus can suppress hydrolysis and odors. Therefore, a resin composition including the copolyester of the present embodiment is expected to be used for various applications such as sustainable products (packaging materials and films).

## Claims

**1.** A copolyester comprising:

a constituent unit (3HB-U) derived from 3-hydroxybutyric acid (3HB);
a constituent unit (DA-U) derived from dicarboxylic acid (DA); and
a constituent unit (DO-U) derived from diol (DO),

wherein

the dicarboxylic acid (DA) includes aliphatic dicarboxylic acid,
the diol (DO) includes aliphatic diol,
a content of the constituent unit (3HB-U) derived from the 3-hydroxybutyric acid (3HB) is 1-65 mol% with respect to 100 mol of all constituent units of the copolyester,
an average chain length of the constituent unit (3HB-U) derived from the 3-hydroxybutyric acid (3HB) in the copolyester is 2-80, and

an acid value of the copolyester is 5 or less.

2. The copolyester according to claim 1, wherein the copolyester is a reaction product of poly(3-hydroxybutyric acid) (PHB) being a polyester of the 3-hydroxybutyric acid (3HB) and a polyester (PAO) of the dicarboxylic acid (DA) and the diol (DO).

3. The copolyester according to claim 2, wherein a number average molecular weight of the poly(3-hydroxybutyric acid) (PHB) is 1,000-500,000.

4. The copolyester according to claim 2, wherein a number average molecular weight of the polyester (PAO) is 5,000-500,000.

5. The copolyester according to claim 2, wherein an acid value of the polyester (PAO) is 5 or less.

6. The copolyester according to claim 1, wherein the dicarboxylic acid (DA) is aliphatic dicarboxylic acid.

7. The copolyester according to claim 1, wherein the diol (DO) is aliphatic diol.

8. A method for producing the copolyester according to any one of claims 1 to 7, the method comprising a step of causing a reaction between

poly(3-hydroxybutyric acid) (PHB) being a polyester of the 3-hydroxybutyric acid (3HB) and
a polyester (PAO) of the dicarboxylic acid (DA) and the diol (DO).

9. A resin composition comprising the copolyester according to any one of claims 1 to 7.

10. A sheet or a film comprising the resin composition according to claim 9.

Fig. 1

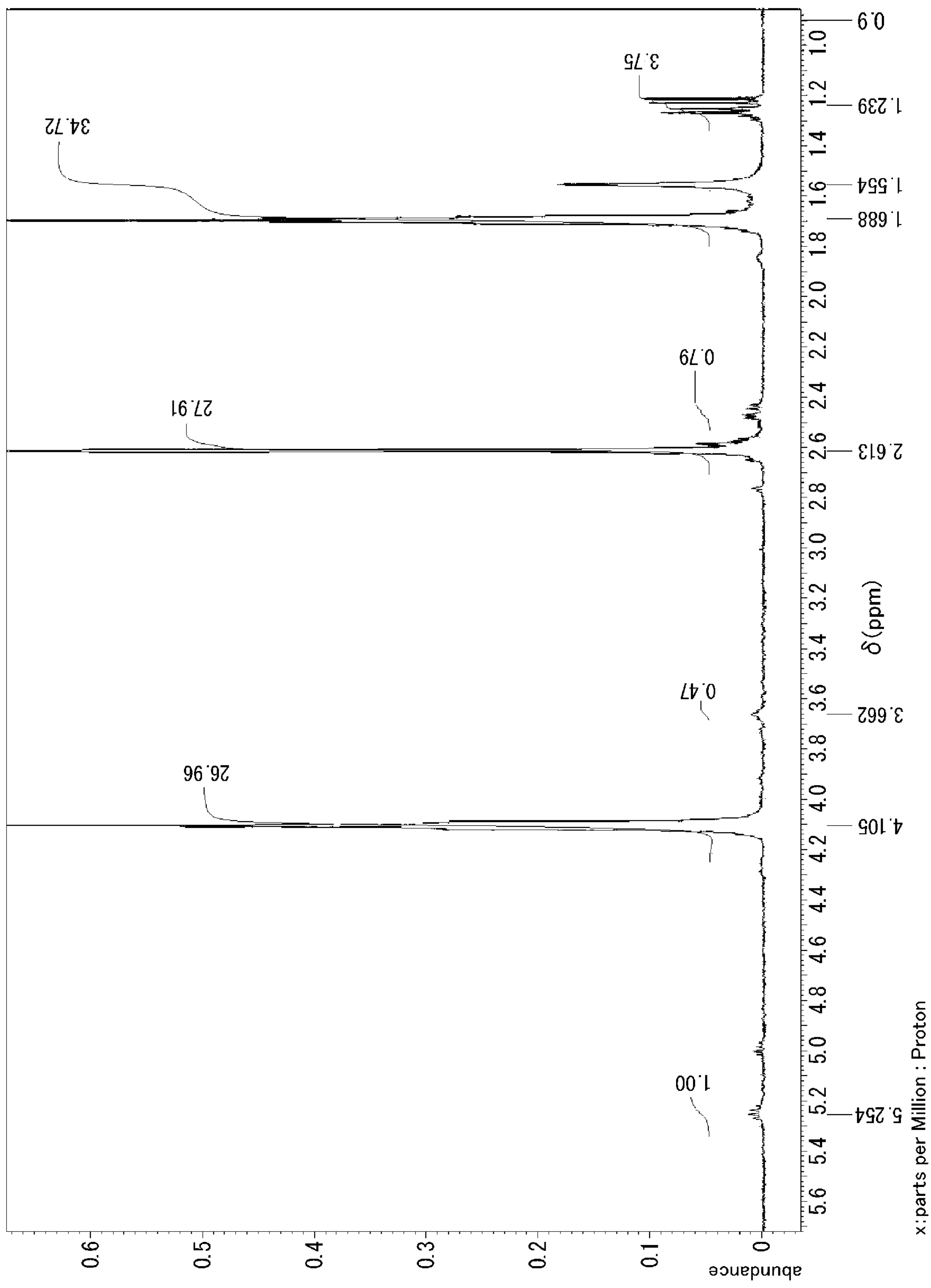

δ(ppm)
x:parts per Million : Proton
abundance
0.9
1.239
1.554
1.688
2.613
3.662
4.105
5.254
3.75
34.72
0.79
27.91
0.47
26.96
1.00

Fig. 2

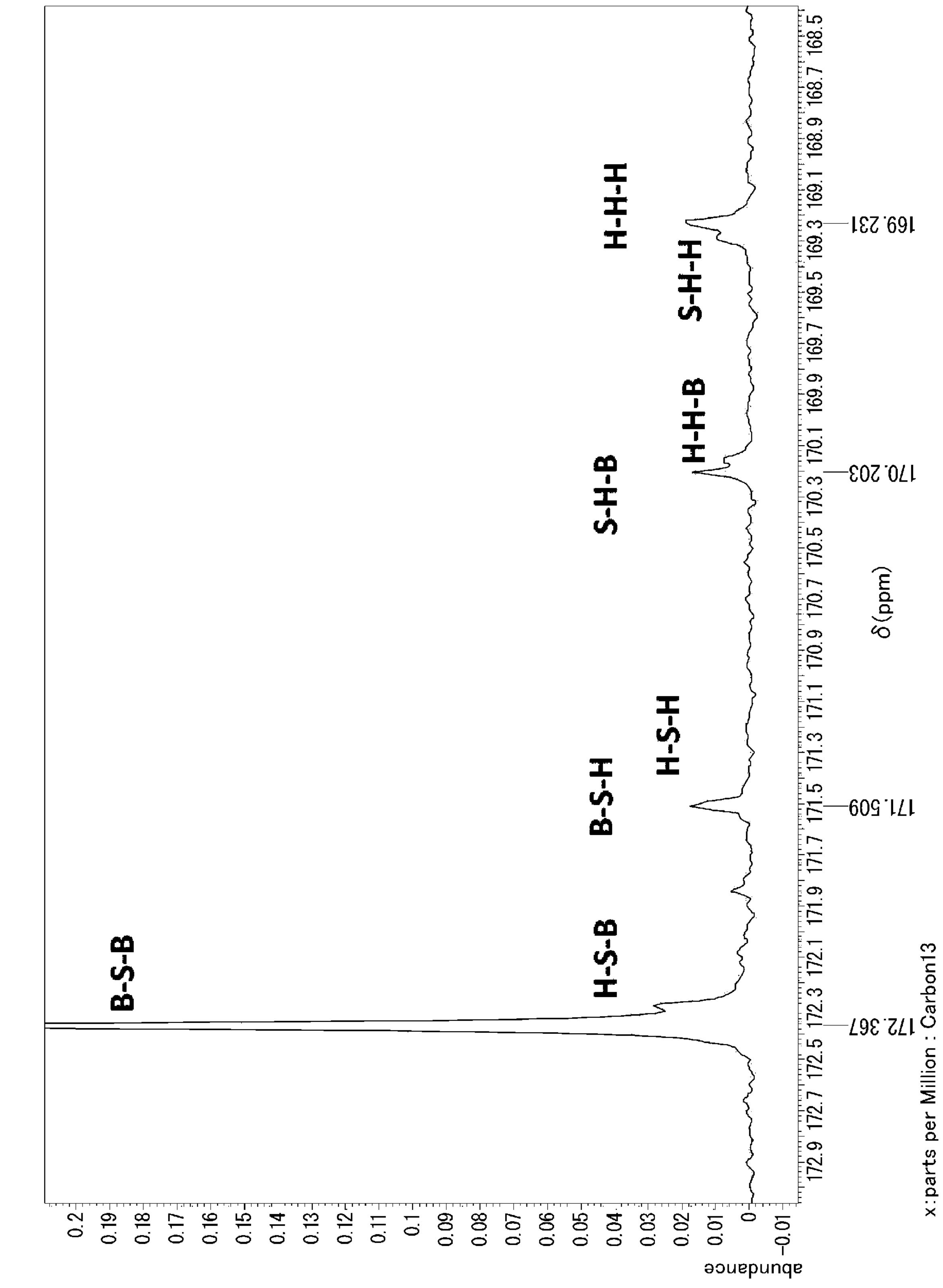
B-S-B
H-S-B
B-S-H
H-S-H
S-H-B
H-H-B
S-H-H
H-H-H
172.367
171.509
170.203
169.231
δ(ppm)
x : parts per Million : Carbon13
abundance

## INTERNATIONAL SEARCH REPORT

International application No.
**PCT/JP2023/027959**

**A. CLASSIFICATION OF SUBJECT MATTER**

***C08G 63/60***(2006.01)i; ***C08G 63/78***(2006.01)i; ***C08L 101/16***(2006.01)i
FI: C08G63/60; C08G63/78; C08L101/16

According to International Patent Classification (IPC) or to both national classification and IPC

**B. FIELDS SEARCHED**

Minimum documentation searched (classification system followed by classification symbols)

C08G63/60; C08G63/78; C08L101/16

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY/CASREACT (STN)

**C. DOCUMENTS CONSIDERED TO BE RELEVANT**

| Category* | Citation of document, with indication, where appropriate, of the relevant passages | Relevant to claim No. |
|---|---|---|
| A | CN 112708246 A (CHINESE PETROCHEMICALS CO., LTD.) 27 April 2021 (2021-04-27) | 1-10 |
| A | CN 111205603 A (CHINESE PETROCHEMICALS CO., LTD.) 29 May 2020 (2020-05-29) | 1-10 |
| A | CN 101045810 A (SHANGHAI JIAOTONG UNIVERSITY) 03 October 2007 (2007-10-03) | 1-10 |
| A | US 2022/0089862 A1 (MEREDIAN BIOPLASTICS, INC.) 24 March 2022 (2022-03-24) | 1-10 |
| A | JP 2018-16720 A (OSAKA GAS CO., LTD.) 01 February 2018 (2018-02-01) | 1-10 |
| A | WO 2020/242874 A1 (DANIMER BIOPLASTICS, INC.) 03 December 2020 (2020-12-03) | 1-10 |
| A | JP 2017-25138 A (OSAKA GAS CO., LTD.) 02 February 2017 (2017-02-02) | 1-10 |
| A | JP 2006-274252 A (DAICEL CHEM. IND., LTD.) 12 October 2006 (2006-10-12) | 1-10 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **28 September 2023** | **10 October 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2023/027959**

| Patent document cited in search report | Publication date (day/month/year) | Patent family member(s) | Publication date (day/month/year) |
|---|---|---|---|
| CN 112708246 A | 27 April 2021 | (Family: none) | |
| CN 111205603 A | 29 May 2020 | (Family: none) | |
| CN 101045810 A | 03 October 2007 | (Family: none) | |
| US 2022/0089862 A1 | 24 March 2022 | WO 2022/066866 A1 | |
| JP 2018-16720 A | 01 February 2018 | (Family: none) | |
| WO 2020/242874 A1 | 03 December 2020 | JP 2022-536001 A<br>US 2020/0369872 A1<br>EP 3976686 A1<br>CN 113993929 A<br>KR 10-2022-0013557 A | |
| JP 2017-25138 A | 02 February 2017 | (Family: none) | |
| JP 2006-274252 A | 12 October 2006 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2022122988 A
- JP 2017025138 A


### Non-patent literature cited in the description


- **THIBAUD DEBUISSY** ; **ERIC POLLET** ; **LUC AVEROUS, OHKITA**. Titanium-catalyzed transesterification as a route to the synthesis of fully biobased poly(3-hydroxybutyurateco-butylenedicarboxylate) copolyesters, from their homopolyesters. *European Polymer Journal*, 2017, vol. 90, 92-104
- **SHINJI YAMADA** ; **AKNORI TAKASU** ; **SADATSUGU TAKAYAMA** ; **KAZUHIKO KAWAMURA**. Microwave-assisted solution polycondensation of L-lactic acid using a Dean-Stark apparatus for a non-thermal microwave polymerization effect induced by the electric field. *Polym. Chem.*, 2014, vol. 5, 5283-5288
- **SHUANGBAO PENG** ; **ZHIYANG BU** ; **LINBO WU** ; **BO-GENG LI** ; **PHILIPPE DUBOIS**. High molecular weight poly(butylene succinate-co-furandicarboxylate) with 10 mol% of BF unit: Synthesis, crystallization-melting behavior and mechanical properties. *European Polymer Journal*, 2017, vol. 96, 248-255
- **ATSUYOSHI NAKAYAMA** ; **NAOKO YAMANO** ; **NORIOKI KAWASAKI**. Biodegradation in seawater of aliphatic polyesters. *Polymer Degradation and Stability*, 2019, vol. 166, 290-299